(19)

Europäisches
Patentamt

European
Patent Office

Office européen
des brevets

(11) **EP 4 765 725 A1**

(12) **EUROPEAN PATENT APPLICATION**

(43) Date of publication:
**24.06.2026 Bulletin 2026/26**

(21) Application number: **25224813.3**

(22) Date of filing: **18.12.2025**

(51) International Patent Classification (IPC):
*H04L 9/08* (2006.01)    *H04L 9/12* (2006.01)
*H04L 9/40* (2022.01)    *H10W 70/60* (2026.01)

(52) Cooperative Patent Classification (CPC):
**H04L 9/0891; H04L 9/12; H04L 9/40; H10W 70/611**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **18.12.2024 US 202418986492**

(71) Applicant: **Nvidia Corporation
Santa Clara, CA 95051 (US)**

(72) Inventors:
• **KRISHNAMURTHY, Adithya Hrudhayan
Santa Clara, 95051 (US)**
• **ZEVULUN, Adir
Santa Clara, 95051 (US)**
• **LIM, Sungmin
Santa Clara, 95051 (US)**
• **CHADHA, Ish
Santa Clara, 95051 (US)**
• **ROM, Noam
Santa Clara, 95051 (US)**

(74) Representative: **Mathys & Squire
32 London Bridge Street
The Shard
London SE1 9SG (GB)**

(54) **ENCRYPTION KEY ROTATION WITHOUT INBAND SYNCHRONIZATION OVER A COMMUNICATION INTERCONNECT**

(57)     A device includes a transmitter coupled to a communication network, a first controller coupled to the transmitter via a control channel, and control logic coupled to the first controller and the transmitter, the control logic to: determine whether the first controller is synchronized with a respective controller of a second device; cause the transmitter to transmit a first number of communications based on a first encryption key in response to a determination that the first controller is synchronized with the respective controller; determine whether the first number of communications satisfies a first threshold condition based on a first encryption interval corresponding to the first encryption key; and cause the transmitter to transmit a second number of communications based on a second encryption key in response to a determination that the first number of communications satisfies the first threshold condition.

**FIG. 1**

## Description

TECHNICAL FIELD

At least one embodiment pertains processor communications over a channel, such as a datalink. For example, at least one embodiment pertains to encryption key rotation without inband synchronization over a communication interconnect.

BACKGROUND

In certain communication interconnect systems, such as chip-to-chip (C2C) interconnects, or die-to-die (D2D) interconnects, data transmitted across a channel is often segmented into smaller units, commonly known as "frames," to facilitate efficient data handling. Frames can be encrypted to provide enhanced security for data transmission across the communication interconnect.

SUMMARY

The invention is defined by the claims. In order to illustrate the invention, aspects and embodiments which may or may not fall within the scope of the claims are described herein.

A device includes a transmitter coupled to a communication network, a first controller coupled to the transmitter via a control channel, and control logic coupled to the first controller and the transmitter, the control logic to: determine whether the first controller is synchronized with a respective controller of a second device; cause the transmitter to transmit a first number of communications based on a first encryption key in response to a determination that the first controller is synchronized with the respective controller; determine whether the first number of communications satisfies a first threshold condition based on a first encryption interval corresponding to the first encryption key; and cause the transmitter to transmit a second number of communications based on a second encryption key in response to a determination that the first number of communications satisfies the first threshold condition.

Any feature of one aspect or embodiment may be applied to other aspects or embodiments, in any appropriate combination. In particular, any feature of a method aspect or embodiment may be applied to an apparatus aspect or embodiment, and vice versa.

BRIEF DESCRIPTION OF DRAWINGS

Various embodiments in accordance with aspects of the disclosure will be described with reference to the drawings, in which:

   FIG. 1 is a block diagram of an example communication interconnect, according to aspects of the disclosure.

   FIG. 2 is an example block diagram of a communication device in a communication interconnect, according to some aspects of the disclosure.

   FIG. 3 is an example of a timing diagram illustrating encryption intervals and corresponding encryption keys, according to some aspects of the disclosure.

   FIG. 4 is a flow diagram of an example method for encryption key rotation without inband synchronization over a communication interconnect, according to aspects of the disclosure.

   FIG. 5 is an example flow diagram of an example method for encryption key rotation without inband synchronization over a communication interconnect, according to some aspects of the disclosure.

   FIG. 6 is an example flow diagram of an example method for encryption key rotation without inband synchronization over a communication interconnect, according to some aspects of the disclosure.

   FIG. 7 is a block diagram illustrating an exemplary computer system which can be a system with interconnected devices and components, a system-on-a-chip (SOC), or some combination thereof, according to aspects of the disclosure.

   FIG. 8 is a block diagram illustrating an electronic device for utilizing a processor, according to aspects of the disclosure.

   FIG. 9 is a block diagram of a processing system, according to aspects of the disclosure.

   FIG. 10 is a block diagram of a computing system having two processing devices coupled to each other and multiple networks according to some aspects of the disclosure.

   FIG. 11 is a block diagram of a computing system having a CPU and a GPU in a single integrated circuit according to at least one embodiment.

   FIG. 12 is a block diagram of a computing system having tensor core GPUs according to at least one embodiment.

DETAILED DESCRIPTION

Data can be processed by multiple coupled integrated circuits (ICs) that may each perform different-sometimes specialized-functions. Often these ICs are colloquially referred to as 'chips,' with reference to the final stages of the semiconductor manufacturing process where the ICs (e.g., the chips) are cut from a larger semiconductor wafer. The ICs can be packaged with necessary input/output (I/O) connections, and other circuitry and the resulting apparatus can be referred to as a 'chip.' Thus, a 'communication interconnect' or 'chip-to-chip (C2C) interconnect' can describe an electrical and data coupling (e.g., interconnect) between at least two distinct chips (e.g., ICs). An unpackaged IC that has been cut from a larger semiconductor wafer can be colloquially referred to as a 'die.' Thus, a 'communication interconnect' or 'die-to-die (D2D) interconnect' can describe an electrical and data coupling (e.g., interconnect) between at least two distinct dies (e.g., ICs).

Synchronization in a communication interconnect is achieved by consistently transmitting and receiving frames in both directions at a regular rate (e.g., an active link or channel). Here, a 'frame' refers to a defined package of data with a predetermined size. Often, it is more efficient to maintain an active channel between chips rather than pausing and restarting the channel based on data availability, and some physical channels require an active channel to constantly stream.

The integrity of the communication interconnect is upheld by data within each transmitted and received frame. Typically, each frame may contain header information, which may include information about the transmitting device, the channel, and other relevant aspects of the interconnect. To ensure data accuracy, frames often carry error-checking data, such as cyclic redundancy check (CRC) data. The CRC data may be used to validate the integrity of the data communicated across the interconnect. In some configurations, the CRC data for an outgoing is generated based on header information from a recently received frame.

In certain configurations, frames are structured into multiple subframes, each of a fixed size. When a subframe is transmitted at a frequency of one per clock cycle, it is referred to as a 'flit.' In these scenarios, the initial flit of a frame typically contains the header information, while the final flit contains the CRC data. Frames carrying are often termed 'client frames' (i.e., of the client frame type). Conversely frames without client data are referred to as non-operational (NOP) frames (i.e., of the NOP frame type).

Often when communications (e.g., frames) are encrypted, some amount of communication about the encryption is sent across the communication network (e.g., as an "inband" communication). If intercepted, the encryption information may be used to exploit the encrypted communication, such as by a man-in-the-middle attack. Without communication between respective devices on either end of the channel (chips coupled in a C2C interconnect, dies in a D2D interconnect, etc.), effective encryption cannot be achieved because each respective device does not have the information necessary to properly encrypt transmitted communications and then properly decrypted received communications.

Aspects of this disclosure address these and other challenges by implementing encryption key rotation without inband synchronization over a communication interconnect. Once devices are coupled across the communication interconnect, constant communication traffic is required to maintain synchronization between each chip. The technique described in this solution has the capacity to rotate encryption keys without introducing breaking link-level synchronization. Each chip is connected to a respective controller by a control channel. The respective controllers are connected to each other via a component channel. For example, the component channel can be a peripheral component interconnect express (PCIe) link. The controllers verify basic compatibility and communication network requirements via the component channel. Encryption information can be shared between the controllers via the component channel. The controllers push new encryption keys to respective transmitter/receiver block at set intervals. Each interval corresponds to the "rotation" of an encryption key, or how long the encryption key is used for encrypting/decrypting communications across the communication network. The set intervals can be measured based on a count of the number of transmitted and received frames (e.g., "packets") across the communication network.

Advantages of the disclosure include, but are not limited to, an increased power efficiency in communication interconnect, an increased dataflow across the communication interconnect, and an improved encryption strength of the communication interconnect. Other advantages include improved reliability in communication communications, a reduction in corrupted frames and improved handling of received corrupted frames.

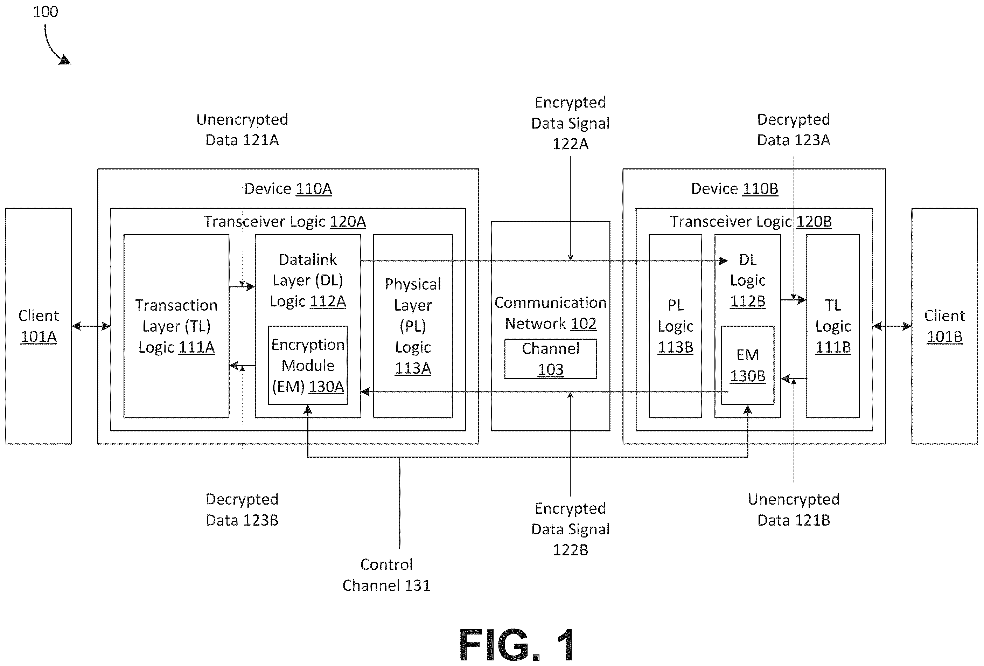

FIG. 1 is an example block diagram of a communication interconnect 100, according to some aspects of the disclosure. The communication interconnect 100 includes a client 101A coupled to a device 110A and a client 101B coupled to a device 110B. The device 110A and the device 110B are coupled together via the communication network 102 to transmit and receive data. In some embodiments, the transmitted and received data is in a data frame. Device 110A includes transaction layer (TL) layer logic 111A, datalink layer (DL) layer logic 112A, and physical layer (PL) logic 113A. The device 110B similarly includes TL logic 111B, DL logic 112B, and PL logic 113B. The function and operation of the device 110A described herein similarly apply to the function and operation of the device 110B unless explicitly noted.

In some embodiments, the client 101A is an integrated circuit of a Personal Computer (PC), a laptop, a tablet, a smartphone, a server, a collection of servers, or the like. In some embodiments, the client 101A may correspond to any appropriate type of device that communicates with other devices also connected to a common type of communication network 202.

The device 110A can be an integrated circuit of a graphics processing unit (GPU), a switch (e.g., a high-speed network switch), a network adapter, a central processing unit (CPU), a data processing unit (DPU), a neural processing unit (NPU), an application-specific integrated circuit (ASIC), a field programmable gate array (FPGA), a network interface card (NIC), or the like. The device 110A can be implemented in components in clients referred to as machines, computers, servers, network devices, or the like (e.g., client 101A).

The communication interconnect 100 allows the client 101A to communicate with the client 101B via the communication network 102 and devices 110A-110B, respectively. The client 101A can cause the device 110A to transmit and receive data with the client 101B (or another client coupled to the communication network 102 via another respective device) via the channel 103. Similarly, the client 101B can cause the device 110B to transmit and receive data across the communication network 102.

Examples of the communication network 102 that may be used to connect the device 110A and device 110B include wires, conductive traces, bumps, terminals, optical fibers, or the like. In other embodiments, the communication network 102 can be a Peripheral Component Interconnect Express (PCIe) interconnect. PCIe is a high-speed interface standard used to connect various hardware components. It can be an interconnect for devices such as graphics cards (GPUs), solid-state drives (SSDs), network cards, and other peripherals. PCIe offers a scalable, high-speed, and point-to-point connection between devices, including CPUs, GPUs, memory, and the like. In other embodiments, the communication network 102 can be a high-speed interconnect, such as an interconnect that deploys the NVLink technology. The NVLink interconnect can be a GPU-GPU interconnect used between GPUs, a CPU-GPU interconnect between GPUs and CPUs, or an interconnect used between other devices. NVLink offers a higher bandwidth and lower latency than traditional PCIe connections, which are typically used in computing hardware. NVLink is especially useful in scenarios that require massive parallel processing, such as artificial intelligence (AI), machine learning, deep learning, high-performance computing (HPC), and data analytics. For example, in NVIDIA's DGX systems and high-end gaming or AI workstations, NVLink helps GPUs exchange data at speeds that are necessary for demanding tasks like real-time ray tracing or training neural networks. In one specific, but non-limiting example, the communication network 102 is a network that enables data transmission between the device 110A and device 110B using data signals (e.g., digital, optical, wireless signals), clock signals, or both. The embodiments described herein can be utilized in a system with a high-speed, scalable switch, such as a switch using the NVSwitch technology. NVSwitch is a high-speed, scalable switch developed by NVIDIA that facilitates data communication between multiple GPUs in a system, allowing them to work together more efficiently by providing high-bandwidth, low-latency interconnections. The NVSwitch serves as a central hub or high-bandwidth fabric that interconnects all the GPUs in a system, enabling each GPU to communicate with every other GPU quickly and efficiently. The NVSwitch can be coupled between other types of devices, such as CPUs, accelerators, memory, or the like. The NVSwitch can be used for tasks requiring intense computation and collaboration between multiple GPUs, such as AI model training, scientific simulations, and large-scale data processing. The embodiments described herein can be used in a high-performance computing system, such as a computing system modeled after NVIDIA's DGX systems, which are designed specifically for artificial intelligence (AI), deep learning, and high-performance computing (HPC) workloads. DGX systems are optimized for large-scale GPU computation and parallel processing, integrating multiple GPUs, high-bandwidth interconnects, and software frameworks tailored for AI and HPC tasks. In at least one embodiment, a system for high-speed network communication includes a processing unit, a network interface comprising a receiver or transceiver with the control logic, as described herein.

Other examples for the communication network 102 can include other chip-to-chip or die-to-die interconnects, such as GRS, LPI (low power interface) or LLI (low latency interface).

In embodiments, the device 110A can interface with the client 101A to transmit and receive data over a two-way communication stream (e.g., channel 103 of the communication network 102). The channel 103 can be PCIe, NVLink, Ethernet, InfiniBand, Ground Reference Signal (GRS), C2C, D2D, or the like. As illustrated, device 110A is single device which includes transceiver logic 120A (and device 110B respectively includes the transceiver logic 120B). The transceiver logic 120A can be used to send and receive data signals via the communication network 102. In some embodiments, the device 110A can include a transceiver device, transmitter device, or receiver device, which may include some or all of the transceiver logic 120A.

The transceiver logic 120A includes suitable software, firmware, and/or hardware for receiving digital data from a source (e.g., client 101A) and outputting data signals according to the digital data for transmission over the communication network 102. In some embodiments, the transceiver logic 120A can generate and transmit frames including data from the client 101A over the communication network 102 to the device 110B. For example, the transceiver logic 120A can generate and transmit frames across the channel 103 to the device 110B.

The transceiver logic 120A also includes suitable software, firmware, and/or hardware for receiving digital data from a device over the communication network 102 and outputting digital data for further processing by a recipient (e.g., client 101A). For example, the transceiver logic 120A may include components for receiving processing signals to extract the data for storing in a memory. In some embodiments, the transceiver logic 120A can receive and process frames including data from the client 101A over the communication network 102 from another device 110B. For example, the transceiver logic 120B can receive and process frames including data from the client 101A across the channel 103 from the device 110B. In some embodiments, the transceiver logic 120A receives an incoming signal and samples the incoming signal to generate samples, such as using an analog-to-digital converter (ADC). The ADC can be controlled by a clock-recovery circuit (or clock recovery block) in a closed-loop tracking scheme. The clock-recovery circuit can include a controlled oscillator, such as a voltage-controlled oscillator (VCO) or a digitally-controlled oscillator (DCO) that controls the sampling of the subsequent data by the ADC.

The transceiver logic 120A include multiple processing elements, such as is one or more of transaction layer logic 111A, datalink layer logic 112A, or physical layer logic 113A, as illustrated. Similarly, the transceiver logic 120B of the device 110B can include corresponding processing elements such as TL logic 111B, DL logic 112B, and PL logic 113B, as illustrated. The transceiver logic 120A or selected elements of the device 110A may take the form of a pluggable card or respective controller for the device 110A. For example, the transceiver logic 120A or selected elements of the device 110A may be implemented on a network interface card (NIC). In an alternative example, the functions of the transceiver logic 120A can be performed by separate devices of the communication interconnect 100. For example, a first device can include the transaction layer logic 111A, a second device can include the datalink layer logic 112A, and a third device can include the physical layer logic 113A.

The transaction layer logic 111A can interface directly with the client 101A. The transaction layer logic 111A can receive data from the client (e.g., "client data") that is to be transmitted across the communication network 102. In some embodiments, the transaction layer logic 111A can divide the data received from the client into predetermined quantities. For example, data received from the client 101A may be several kilobytes of data, and the transaction layer logic 111A can break the data down into evenly sized chunks of one byte each. Additional predetermined "chunk" sizes or data quantities are considered.

The datalink layer logic 112A can receive the predetermined quantity of data from the transaction layer logic 111A as unencrypted data 121A. The datalink layer logic 112A can package the unencrypted data 121A into a frame to be transmitted across the communication network 102. In some embodiments, a frame of data includes the quantity of data (e.g., one byte of data). In some embodiments, the datalink layer logic 112A includes an encryption module (EM) 130A for encrypting the frame into an encrypted data signal 122A (e.g., an encrypted data frame).

The physical layer logic 113A interfaces directly with the communication network 102 to transmit the encrypted data signal 122A across the communication network 102 to the device 110B, where the PL logic 113B provides the encrypted data signal 122A to the DL logic 112B. The DL logic 112B uses the EM module 130B to extract decrypted data 123A from the encrypted data signal 122A. The TL logic 111B can provide the decrypted data 123A to the client 101B. Similarly, unencrypted data 121B can be sent from TL logic 111B to DL logic 112B which encrypts the unencrypted data 121B into an encrypted data signal 122B. The encrypted data signal 122B is received via the physical layer logic 113A of the device 110A. At the datalink layer logic 112A, decrypted data 123B is extracted from the encrypted data signal 122B which is provided to the client 101A by the transaction layer logic 111A. In some embodiments, the TL logic 111B assembles multiple sets of decrypted data 123A to provide to the client 101B simultaneously. The encrypted data signal 122B can be similarly received through the physical layer logic 113A, processed by the datalink layer logic 112A, and provided to the client 101A by the transaction layer logic 111A.

The encryption module 130A of the device 110A and the EM 130B of the device 110B can be connected to a control channel 131. The control channel 131 can provide each of the encryption module 130A and the EM 130B with encryption information for encryption and decryption of frames at the datalink layer logic 112A and DL logic 112B, respectively. As illustrated, it is noted that the control channel 131 is separate from the communication network 102. The control channel 131 operates outside of the communication network 102, and is not a side-band of the communication network 102, but rather a separate connection within a cluster of trusted components (e.g., on a circuit board). As used herein, "cluster of trusted components" refers to a group of components on a circuit board that communicate directly via physical connections on the circuit board. Communications between the cluster of trusted components may not be encrypted, as the cluster of trusted components is known to constitute a secure environment. In some embodiments, the encryption module 130A and the EM 130B can be setup by software or firmware from within the cluster of trusted components. For example, first software/firmware can be trusted by the encryption module 130A, and second software/firmware can be trusted by the EM 130B. The first software/firmware can communicate with the second software/firmware to determine encryption parameters for the encryption module 130A and the EM 130B. In some embodiments, the communication between the first and second software/firmware can be encrypted, separate from the encryption between the device 110A and the device 110B.

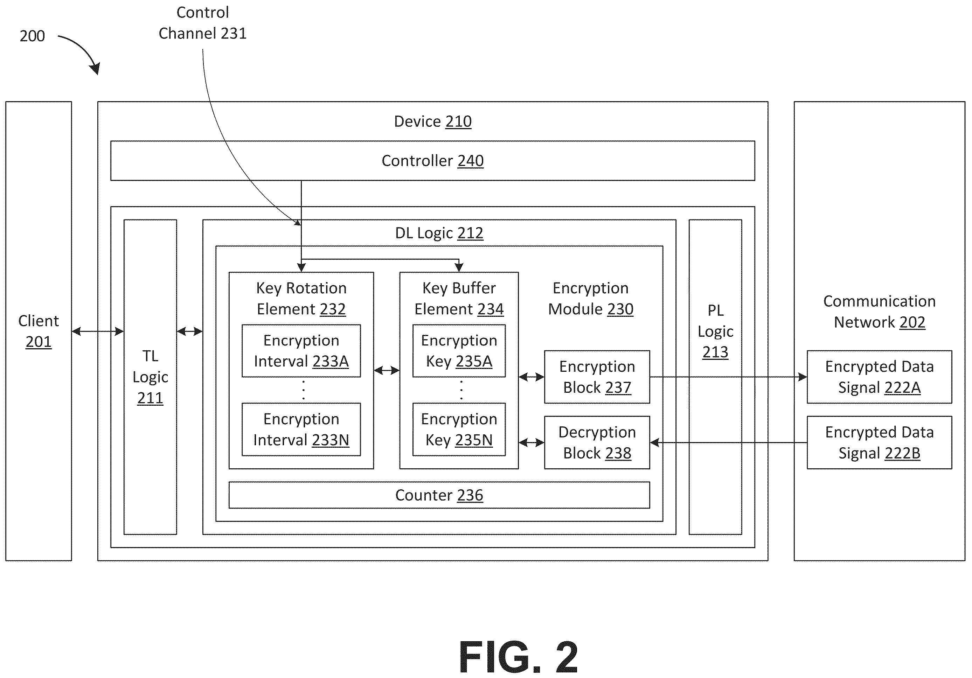

In some embodiments, the control channel 131 is connected to and managed by a controller (not illustrated). In some embodiments, the control channel 131 is connected to and managed by respective firmware of the device 110A and the device 110B. In such embodiments, the firmware of the device 110A and the firmware of the device 110B are synchronized prior to starting the encryption and decryption of frames at the datalink layer logic 112A and DL logic 112B, respectively. That is, the device 110A and the device 110B are initially synchronized by the control channel 131. The encryption module 130A and the encryption module 130B can be initialized by a signal sent via the control channel 131, such that each can have the same initial encryption key. Subsequently, due to the key rotation elements contained in each of the encryption modules (as described below with reference to FIG. 2), the two encryption modules can achieve bidirectional independent encryption key rotation. Because information regarding the encryption key setup or rotation is not transmitted across the interconnect, the encryption key rotation is bubble-free and does not disrupt high-bandwidth transmissions. That is, each encryption module can independently track and rotate through encryption keys such that the device 110A and the device 110B can remain in continuous encrypted communication. In some embodiments, the encryption module can include a hardware component such as a register, or hardware counter, etc., that is incremented for each communication that is received and/or transmitted (depending on the embodiment) via the communication network 102. In some embodiments, Additional details the encryption module and encryption key rotation are described below with reference to FIGs. 2-3.

The use of the two encryption modules (e.g., encryption module 130A and EM 130B) allow the encryption keys of each device (e.g., device 110A and device 110B) to rotate without breaking link-level synchronization (e.g., while maintaining link-level synchronization). That is, link-level synchronization between the two devices can be maintained as long as the two devices continue to transmit and receive communications across the communication network 102. Individual communications do not need to carry encryption key rotation or encryption management information, which can free up additional bandwidth to transmit data across the interconnect. Additionally, the communications will not be interrupted by encryption information-dedicated traffic, as the management of the encryption between the two devices (including the encryption key rotation information) does not rely on the contents of any of the transmitted communications (e.g., the encryption key rotation can occur regardless of whether there are errors in the data of the communication, provided the communication was received).

**FIG. 2** is an example block diagram of a communication device in a communication interconnect 200, according to some aspects of the disclosure. The client 201 is coupled to the device 210 (e.g., the communication device). The device 210 can be the same as or similar to the device 110A of **FIG. 1.** Similarly, other elements of the communication interconnect 200 can be the same as or similar to corresponding elements of the communication interconnect 100 of **FIG. 1.**

The device 210 includes TL logic 211 (e.g., transaction layer logic 111A), DL logic 212 (e.g., datalink layer logic 112A), PL logic 213 (e.g., physical layer logic 113A), and a controller 240.

DL logic 212 can include or control an encryption module 230. The encryption module 230 can include a key rotation element 232, a key buffer element 234, an encryption block 237, and a decryption block 238.

The key rotation element 232 and the key buffer element 234 can be coupled to the controller 240 (external to the DL logic 212) by the control channel 231. The control channel 231 can transmit data representing encryption information to the key rotation element 232 and the key buffer element 234. While illustrated as a single control channel 231, in alternative embodiments, multiple control channels individually couple the key rotation element 232 and the key buffer element 234 to the controller 240.

The key rotation element 232 can control an encryption interval (e.g., encryption interval 233A through encryption interval 233N) that the device 210 uses a particular encryption key (e.g., encryption key 235A through encryption key 235N) to encrypt transmitted frames (e.g., encrypted data signal 222A) and/or decrypt received frames (e.g., encrypted data signal 222B). That is, the encryption interval 233A can correspond to a duration that the device 210 uses the encryption key 235A. The key buffer element 234 can store the encryption key 235A through the encryption key 235N used by the device 210. Each encryption key 235A through encryption key 235N is linked to an encryption interval 233A through encryption interval 233N. For example, encryption interval 233A is linked to encryption key 235A, encryption interval 233N is linked to encryption key 235N, and so forth.

The key rotation element 232 store information that indicates how long a particular encryption key is to be used (e.g., the encryption interval 233A through the encryption interval 233N). In some embodiments, the encryption interval is a temporal duration that is measured in hours, minutes, seconds, or the like. In some embodiments, the encryption interval is tied to a number of frames that are transmitted and/or received by the device 210. In some embodiments, the key rotation element 232 can store an indication of a threshold condition based on the encryption interval.

The encryption module 230 can include a counter 236 that stores a count of the number of encrypted data signal 222A that have been transmitted by the device 210. In some embodiments, the counter 236 represents a value stored in memory associated with the device 210 (not shown). In some embodiments, the counter 236 is one or more registers used to store and represent various counts that are tracked by the device 210 (e.g., one or more counter registers). In some embodiments, the counter 236 stores a count of the number of encrypted data signal 222B that have been received by the device 210. In some embodiments, the counter 236 stores a total count of the number of encrypted data signal 222A that have been transmitted and the number of encrypted data signal 222B that have been received. When the value of the counter 236 satisfies a threshold condition based on the particular encryption interval (e.g., the encryption interval 233A) linked to a particular encryption key (e.g., the encryption key 235A), the device 210 begins using a new encryption key (e.g., the encryption key 235N) to encrypt and/or decrypt data frames (e.g., encrypted data signal 222A or encrypted data signal 222B). When the device 210 begins to use a new encryption key, firmware from the controller 240 can push the new encryption keys into the encryption module 230 (e.g., push onto a queue of encryption keys in the key buffer element 234). In an alternative embodiment, the encryption module 230 can interrupt the controller 240 to request an encryption key 235N.

For example, the threshold condition can be based on an encryption interval of ten transmitted frames. Once the counter 236 is equal to or greater than ten, the threshold condition is satisfied and the encryption interval (e.g., encryption interval 233A) for the particular encryption key (e.g., encryption key 235A) has concluded. The next encryption key (e.g., encryption key 235N) can then be used for the next linked encryption interval (e.g., encryption interval 233N).

In another example, the threshold condition can be based on an encryption interval of ten transmitted and ten received frames. The counter 236 can track the number of transmitted frames and the number of received frames. Once the number of transmitted frames and the number of received frames are each equal to or greater than ten, the threshold condition is satisfied and the encryption interval (e.g., encryption interval 233A) for the particular encryption key (e.g., encryption key 235A) has concluded. The next encryption key (e.g., encryption key 235N) can then be used for the next linked encryption interval (e.g., encryption interval 233N).

In some embodiments, the encryption block 237 and the decryption block 238 are coupled to the key buffer element, and each receive the encryption key from the key buffer element 234. In some embodiments, the encryption block 237 receives one encryption key while the decryption block 238 receives another encryption key. The key rotation element 232 can indicate to encryption module 230 when a new encryption key should be used from the key buffer element 234. In some embodiments, the key rotation element 232 can prompt the key buffer element 234 to provide the next encryption key (e.g., encryption key 235N) to the encryption module 230.

The controller 240 can be implemented in any combination of one or more of hardware, firmware, or software. The controller 240 can provide encryption information to the key rotation element 232 and the key buffer element 234. In some embodiments, the encryption information provided to the key rotation element 232 includes an encryption interval (e.g., encryption interval 233N). In some embodiments, the encryption information provided to the key buffer element includes an encryption key (e.g., encryption key 235N). The controller 240 can select pairs of linked encryption intervals and encryption keys to provide as encryption information to the encryption module 230. In some embodiments, the selection is based on a predetermined encryption algorithm, or preselected series of encryption keys. In some embodiments, the selection is based on a random, or pseudo-random ordering of predetermined, or generated encryption keys. In some embodiments, the controller 240 receives the encryption keys from another encryption element. In some embodiments, the controller 240 generates the encryption keys (and corresponding encryption intervals) based on predetermined encryption algorithms, such as a known elliptical curve encryption algorithm. In some embodiments, the controller 240 of the device 210 is synchronized to another controller of another device. This synchronization may be achieved through any combination of hardware, firmware, or software. In some embodiments, the synchronization is performed as part of an initialization of each of the devices 210 within a computing environment. For example, the device 210 and the other device can each be peripheral devices that connect via the peripheral component interface express (PCIe) protocol within the computing environment. In some embodiments, (not illustrated) a control channel the same as or similar to control channel 231 connects the controller 240 to the other controller of the other device, or to an intermediate component.

In some embodiments, the device 210 transmits an encrypted data signal 222A at a regular interval and receives an encrypted data signal 222B at the same regular interval. As described above, this may be a requirement of the communication network 202 to maintain synchronization between the device 210 and another device coupled to the device 210 via the link. In some embodiments, the interval at which encrypted data signal 222A are transmitted and encrypted data signal 222B are received is based on a clock signal of the device 210. For example, an encrypted data signal 222A can be transmitted for every clock cycle (e.g., a rising edge followed by a falling edge) of a clock signal. Thus, in some embodiments, the encryption interval can be based on a count of transmitted and/or received frames and have connection to a temporal duration via the frequency of the clock signal. For example, if the frequency of the clock signal is 1 gigahertz (GHz), the encryption interval is 1,000 transmitted frames, and a frame is transmitted each clock cycle, the temporal duration of the encryption interval can be approximately calculated as

$$\frac{1000\ frames}{1 \times 10^9\ hertz} = 1,000 \quad nanoseconds \text{ or } 1\ microsecond.$$

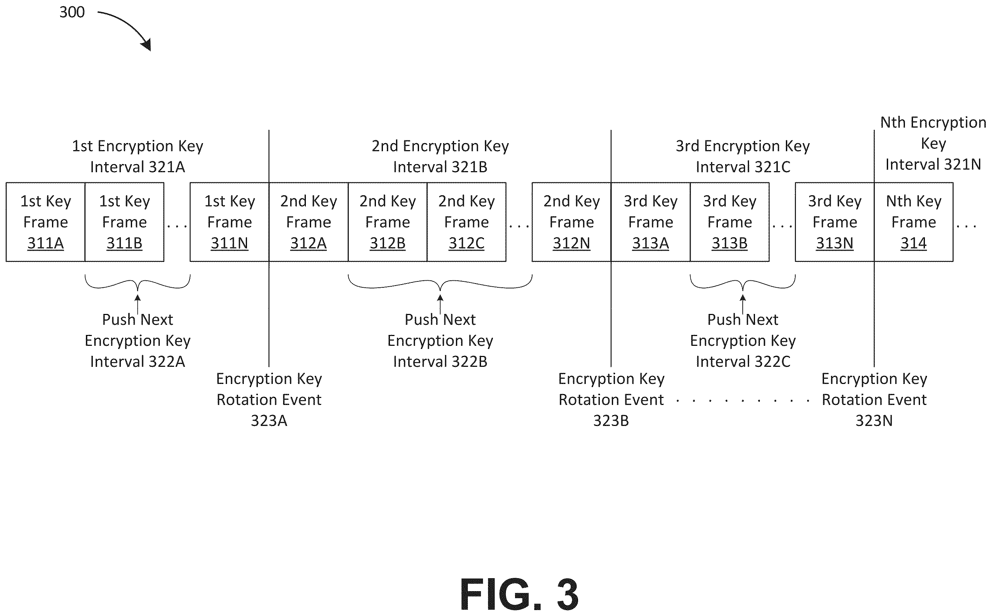

**FIG. 3** is an example of a timing diagram 300 illustrating encryption intervals and corresponding encryption keys, according to some aspects of the disclosure. The timing diagram 300 includes a 1st encryption interval 321A, a 2nd encryption interval 321B, a 3rd encryption interval 321C, and an Nth encryption interval 321N, during which encrypted frames are transmitted (e.g., as encrypted data signals). As can be appreciated, "first" or "1st," "second" or "2nd," "third" or "3rd," do not necessarily specify a particular order, but are used for descriptive purposes only. **FIG. 3** will be described from the perspective of transmitting frames via a communication network (e.g., communication network 102 of **FIG. 1** or communication network 202 of **FIG. 2**); however, it can be appreciated that the same or similar descriptions equally apply to the perspective of receiving frames via the communication network, which in the interest of brevity and clarity is not explicitly described here.

During the 1st encryption interval 321A, a 1st key frame 311A is transmitted followed by a 1st key frame 311B and so forth through a 1st key frame 311N. As soon as the 1st key frame 311N has been transmitted, an encryption key rotation event 323A occurs. During the encryption key rotation event the device transmitting these frames stops using a first encryption key to encrypt transmission frames and starts using a second encryption key to encrypt transmission frames. In this way the first encryption key is "rotated out" for the second encryption key. In some embodiments, the first encryption key may be used again. In alternative embodiments, the first encryption key is destroyed after the encryption key rotation event 323A.

Sometime after the 1st key frame 311A has been transmitted but before the 1st key frame 311N, a controller (e.g., controller 240 of **FIG. 2**) coupled to the key rotation element (e.g., key rotation element 232 of **FIG. 2**) and the key buffer element (e.g., key buffer element 234 of **FIG. 2**) pushes the next encryption interval 322A. In some embodiments, the encryption key pushed by the controller is the next encryption key that will be used by the device after the encryption key rotation event 323A. For example, the encryption key pushed by the controller during the 1st encryption interval 321A can be the second encryption key that will be used during the 2nd encryption interval 321B. In alternative embodiments, the encryption key pushed by the controller is added to a queue of encryption keys to be used during future encryption intervals (i.e., after the next encryption interval). For example, the encryption key pushed by the controller during the 1st encryption interval 321A can be the third encryption key that will be used during the 3rd encryption interval 321C, and so forth.

During the 2nd encryption interval 321B, a 2nd key frame 312A is transmitted followed by a 2nd key frame 312B followed by a 2nd key frame 312C and so forth through a 2nd key frame 312N. As soon as the 2nd key frame 312N has been transmitted, an encryption key rotation event 323B occurs. During the encryption key rotation event 323B the device transmitting these frames stops using a second encryption key to encrypt transmission frames and starts using a third encryption key to encrypt transmission frames. Sometime after the 2nd key frame 312A has been transmitted but before the 2nd key frame 312N, a controller pushes the next encryption interval 322B to the encryption module (e.g., the encryption module 130A of **FIG. 1** or the encryption module 230 of **FIG. 2**).

During the 3rd encryption interval 321B, a 3rd key frame 313A is transmitted followed by a 3rd key frame 313B and so forth through a 3rd key frame 313N. As soon as the 3rd key frame 313N has been transmitted, an encryption key rotation event 323N occurs. During the encryption key rotation event 323N the device transmitting these frames stops using the third encryption key to encrypt transmission frames and starts using an Nth encryption key (e.g., here a "fourth" encryption key) to encrypt transmission frames. Sometime after the 3rd key frame 313A has been transmitted but before the 3rd key frame 313N, a controller pushes the next encryption interval 322C to the encryption module. After the encryption key rotation event 323N, the device uses the Nth encryption key to encrypt the Nth key frame 314 and following frames during the Nth encryption interval 321N.

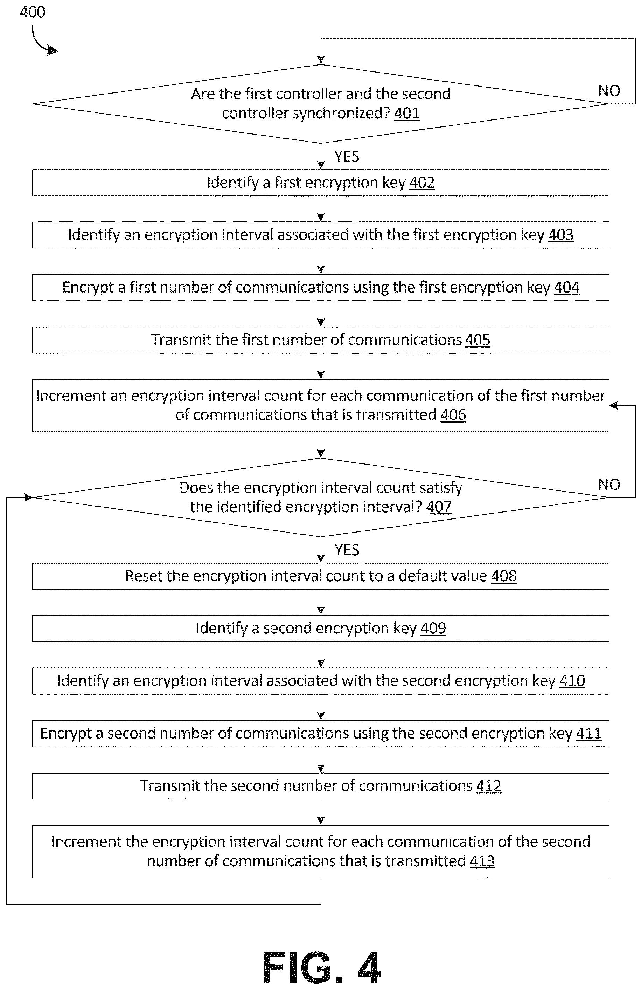

**FIG. 4** is a flow diagram of an example method 400 for encryption key rotation without inband synchronization over a communication interconnect, according to aspects of the disclosure. The method 400 can be performed by control logic that may include hardware (e.g., processing device, circuitry, dedicated logic, programmable logic, microcode, hardware of a device, integrated circuit, etc.), software (e.g., instructions run or executed on a processing device), or a combination thereof. In some embodiments, the method 400 is performed by the datalink layer logic 112A or encryption module 130A of **FIG. 1.** Although shown in a particular sequence or order, unless otherwise specified, the order of the processes can be modified. Thus, the illustrated embodiments should be understood only as examples, and the illustrated processes can be performed in a different order, and some processes can be performed in parallel. Additionally, one or more processes can be omitted in various embodiments. Thus, not all processes are required in every embodiment. Other process flows are possible.

At operation 401, the control logic performing the method 400 determines whether the first controller and the second controller are synchronized. If the controllers are synchronized, the control logic proceeds to operation 402. If the controllers are not synchronized, the control logic returns to the operation 401. In some embodiments, the control logic can perform, or cause to be performed, a synchronization operation between the first controller and the second controller.

At operation 402, the control logic identifies a first encryption key.

At operation 403, the control logic identifies an encryption interval associated with the first encryption key.

At operation 404, the control logic encrypts a first number of communications using the first encryption key.

At operation 405, the control logic transmits the first number of communications.

At operation 406, the control logic increments an encryption interval count for each communication of the first number of communications that is transmitted.

At operation 407, the control logic determines whether the encryption interval count satisfies the identified encryption interval. In some embodiments, the identified encryption interval is the encryption interval identified in the operation 403. In alternative embodiments, or if the operation 407 is being performed again, the identified encryption interval may be the encryption interval identified in operation 410 below. If the encryption interval count satisfies the identified encryption interval, the control logic proceeds to operation 408. If the encryption interval count does not satisfy the identified encryption interval, the control logic returns to the operation 406.

At operation 408, the control logic resets the encryption interval count to a default value.

At operation 409, the control logic identifies a second encryption key.

At operation 410, the control logic identifies an encryption interval associated with the second encryption key.

At operation 411, the control logic encrypts a second number of communications using the second encryption key.

At operation 412, the control logic transmits the second number of communications.

At operation 413, the control logic increments the encryption interval count for each communication of the second number of communications that is transmitted.

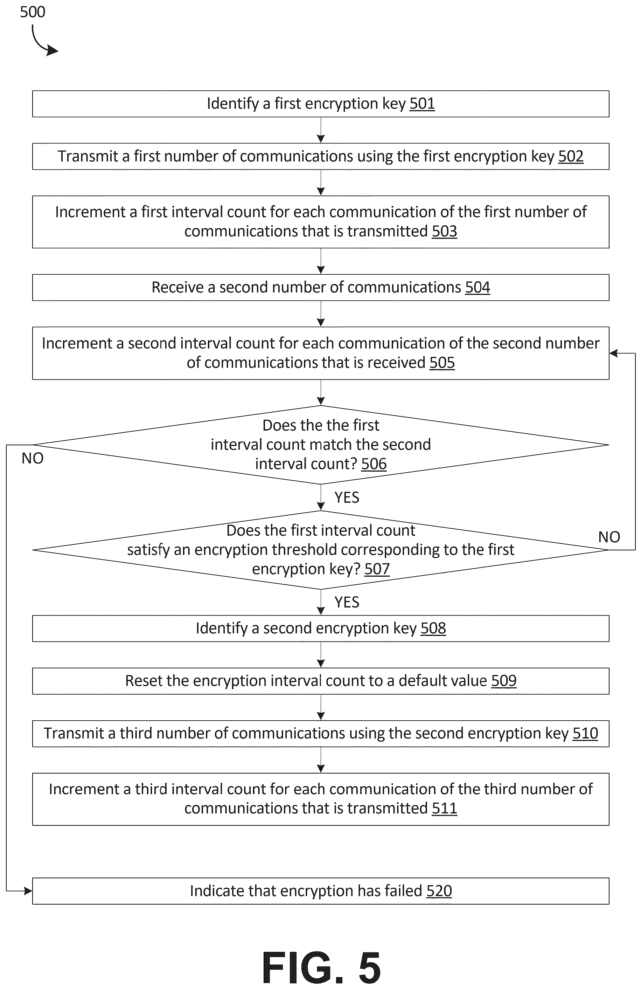

FIG. 5 is an example flow diagram of an example method 500 for encryption key rotation without inband synchronization over a communication interconnect, according to some aspects of the disclosure. The method 500 can be performed by control logic that may include hardware (e.g., processing device, circuitry, dedicated logic, programmable logic, microcode, hardware of a device, integrated circuit, etc.), software (e.g., instructions run or executed on a processing device), or a combination thereof. In some embodiments, the method 500 is performed by the datalink layer logic 112A or encryption module 130A of FIG. 1. Although shown in a particular sequence or order, unless otherwise specified, the order of the processes can be modified. Thus, the illustrated embodiments should be understood only as examples, and the illustrated processes can be performed in a different order, and some processes can be performed in parallel. Additionally, one or more processes can be omitted in various embodiments. Thus, not all processes are required in every embodiment. Other process flows are possible.

At operation 501, the control logic performing the method 500 identifies a first encryption key.

At operation 502, the control logic transmits a first number of communications using the first encryption key.

At operation 503, the control logic increments a first interval count for each communication of the first number of communications that is transmitted.

At operation 504, the control logic receive a second number of communications.

At operation 505, the control logic increments a second interval count for each communication of the second number of communications that is received.

At operation 506, the control logic determines whether the first interval count matches the second interval count. If the first interval count matches the second interval count, the control logic proceeds to operation 507. If the first interval count does not match the second interval count, the control logic jumps to the operation 520, where the control logic indicates that encryption has failed.

At operation 507, the control logic determines whether the first interval count satisfies the encryption threshold corresponding to the first encryption key. In an alternative embodiment, the control logic determines whether the second interval count satisfies the encryption threshold corresponding to the first encryption key. In an alternative embodiment, the control logic determines whether a sum of the first interval count and the second interval count satisfies the encryption threshold corresponding to the first encryption key.

At operation 508, the control logic identifies a second encryption key.

At operation 509, the control logic resets the encryption interval count to a default value.

At operation 510, the control logic transmits a third number of communications using the second encryption key.

At operation 511, the control logic increments a third interval count for each communication of the third number of communications that is transmitted.

At operation 520, responsive to determining at operation 506 that the first interval count does not match the second interval count, the control logic indicates that encryption has failed. In some embodiments, the encryption failure can be based on a compromised channel between the two coupled device. In some embodiments, the encryption failure can be based on one or more of the two coupled devices, or components of each of the two coupled devices.

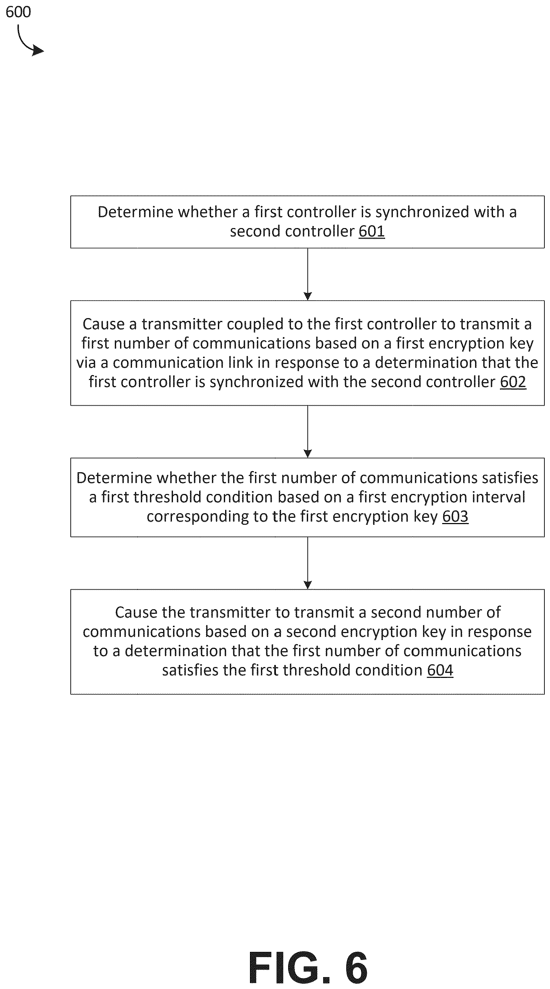

FIG. 6 is an example flow diagram of an example method 600 for encryption key rotation without inband synchronization over a communication interconnect, according to some aspects of the disclosure. The method 600 can be performed by control logic that may include hardware (e.g., processing device, circuitry, dedicated logic, programmable logic, microcode, hardware of a device, integrated circuit, etc.), software (e.g., instructions run or executed on a processing device), or a combination thereof. In some embodiments, the method 600 is performed by the datalink layer logic 112A or encryption module 130A of FIG. 1. Although shown in a particular sequence or order, unless otherwise specified, the order of the processes can be modified. Thus, the illustrated embodiments should be understood only as examples, and the illustrated processes can be performed in a different order, and some processes can be performed in parallel. Additionally, one or more processes can be omitted in various embodiments. Thus, not all processes are required in every embodiment. Other process flows are possible.

At operation 601, the control logic determines whether a first controller is synchronized with a second controller.

At operation 602, the control logic causes a transmitter coupled to the first controller to transmit a first number of communications based on a first encryption key via a communication network in response to a determination that the first controller is synchronized with the second controller.

At operation 603, the control logic determines whether the first number of communications satisfies a first threshold condition based on a first encryption interval corresponding to the first encryption key.

At operation 604, the control logic causes the transmitter to transmit a second number of communications based on a second encryption key in response to a determination that the first number of communications satisfies the first threshold condition.

COMPUTER SYSTEMS

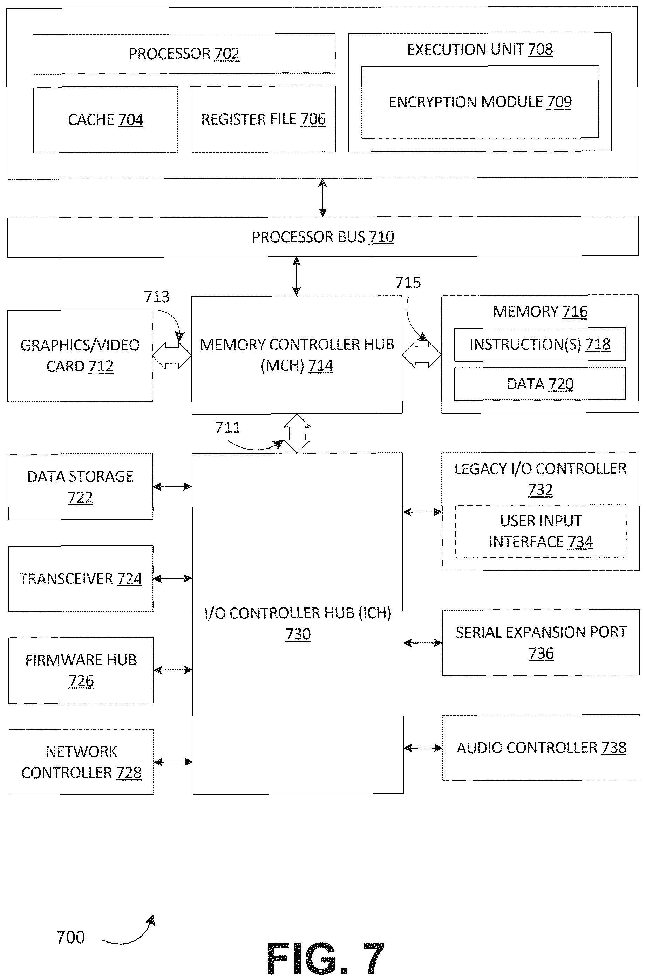

FIG. 7 is a block diagram illustrating an exemplary computer system, such as computer system 700, which can be a system with interconnected devices and components, a system-on-a-chip (SOC), or some combination thereof, according to aspects of the disclosure. In some embodiments, computer system 700 can include, without limitation, a component, such as a processor 702, to employ execution units including logic to perform algorithms for process data, in accordance with the present disclosure, such as in the embodiments described herein. In some embodiments, computer system 700 can include processors, such as PENTIUM® Processor family, XeonTM, Itanium®, XScaleTM and/or StrongARMTM, Intel® Core™, or Intel® Nervana™ microprocessors available from Intel Corporation of Santa Clara, California, although other systems (including PCs having other microprocessors, engineering workstations, set-top boxes and like) can also be used. In some embodiments, computer system 700 can execute a version of WINDOWS' operating system available from Microsoft Corporation of Redmond, Wash., although other operating systems (UNIX and Linux, for example), embedded software, and/or graphical user interfaces, can also be used.

Embodiments can be used in other devices such as handheld devices and embedded applications. Some examples of handheld devices include cellular phones, Internet Protocol devices, digital cameras, personal digital assistants (PDAs), and handheld PCs. In some embodiments, embedded applications can include a microcontroller, a digital signal processor (DSP), a system on a chip, network computers (NetPCs), set-top boxes, network hubs, wide area network (WAN) switches, or any other system that can perform one or more instructions in accordance with at least one embodiment.

In some embodiments, computer system 700 can include, without limitation, processor 702 that can include, without limitation, one or more execution units 708 to perform operations according to techniques described herein. In some embodiments, computer system 700 is a single-processor desktop or server system, but in another embodiment, the computer system 700 can be a multiprocessor system. In some embodiments, processor 702 can include, without limitation, a complex instruction set computer (CISC) microprocessor, a reduced instruction set computing (RISC) microprocessor, a very long instruction word (VLIW) microprocessor, a processor implementing a combination of instruction sets, or any other processor device, such as a digital signal processor, for example. In some embodiments, processor 702 can be coupled to a processor bus 710 that can transmit data signals between processor 702 and other components in computer system 700.

In some embodiments, processor 702 can include, without limitation, a Level-1 (L1) internal cache memory (cache) cache 704. In some embodiments, processor 702 can have a single internal cache or multiple levels of internal cache. In some embodiments, the cache memory can reside external to processor 702. Other embodiments can also include a combination of both internal and external caches depending on particular implementation and needs. In some embodiments, register file 706 can store different types of data in various registers, including and without limitation, integer registers, floating-point registers, status registers, and instruction pointer registers.

In some embodiments, an execution unit 708, including and without limitation, logic to perform integer and floating-point operations, also reside in processor 702. In some embodiments, processor 702 can also include a microcode (μcode) read-only memory (ROM) that stores microcode for certain macro instructions. In some embodiments, execution unit 708 can include logic to handle an encryption module 709. In some embodiments, by including encryption module 709 in an instruction set of a general-purpose processor, such as processor 702, along with associated circuitry to execute instructions, operations used by many multimedia applications can be performed using packed data in a general-purpose processor, such as processor 702. In one or more embodiments, many multimedia applications can be accelerated and executed more efficiently by using the full width of a processor's data bus for performing operations on packed data, which can eliminate the need to transfer smaller units of data across the processor's data bus to perform one or more operations one data element at a time.

In some embodiments, execution unit 708 can also be used in microcontrollers, embedded processors, graphics devices, DSPs, and other types of logic circuits. In some embodiments, computer system 700 can include, without limitation, a memory 716. In some embodiments, memory 716 can be implemented as a Dynamic Random Access Memory (DRAM) device, a Static Random Access Memory (SRAM) device, a flash memory device, or other memory devices. In some embodiments, memory 716 can store instruction(s) 718 and/or data 720 represented by data signals that can be executed by processor 702.

In some embodiments, the system logic chip can be coupled to processor bus 710 and memory 716. In some embodiments, the system logic chip can include, without limitation, a memory controller hub (MCH), such as MCH 714, and processor 702 can communicate with MCH 714 via processor bus 710. In some embodiments, MCH 714 can provide a high bandwidth memory path 715 to memory 716 for instruction and data storage and for storage of graphics commands, data, and textures. In some embodiments, MCH 714 can direct data signals between processor 702, memory 716, and other components in computer system 700 and bridge data signals between processor bus 710, memory 716, and a system input/output (I/O) 711. In some embodiments, a system logic chip can provide a graphics port for coupling to a graphics controller. In some embodiments, MCH 714 can be coupled to memory 716 through a high bandwidth memory path 715, and graphics/video card 712 can be coupled to MCH 714 through an Accelerated Graphics Port (AGP) interconnect 713.

In some embodiments, computer system 700 can use the system I/O 711 that is a proprietary hub interface bus to couple the MCH 714 to I/O controller hub (ICH), such as ICH 730. In some embodiments, ICH 730 can provide direct connections to some I/O devices via a local I/O bus. In some embodiments, a local I/O bus can include, without limitation, a high-speed I/O bus for connecting peripherals to memory 716, chipset, and processor 702. Examples can include, without limitation, data storage 722, a transceiver 724, a firmware hub (flash Basic Input/Output System (BIOS)) 726, a network controller 728, a legacy I/O controller 732 containing a user input interface 734, a serial expansion port 736, such as Universal Serial Bus (USB), and an audio controller 738. In some embodiments, data storage 722 can include a hard disk drive, a floppy disk drive, a compact disc read-only memory (CD-ROM) device, a flash memory device, or other mass storage devices.

In some embodiments, FIG. 7 illustrates a computer system 700, which includes interconnected hardware devices or "chips," whereas, in other embodiments, FIG. 7 can illustrate an exemplary System on a Chip (SoC). In some embodiments, devices can be interconnected with proprietary interconnects, standardized interconnects (e.g., Peripheral Component Interconnect buses (e.g., PCI, PCI Express)), or some combination thereof. In some embodiments, one or more components of computer system 700 are interconnected using compute express link (CXL) interconnects.

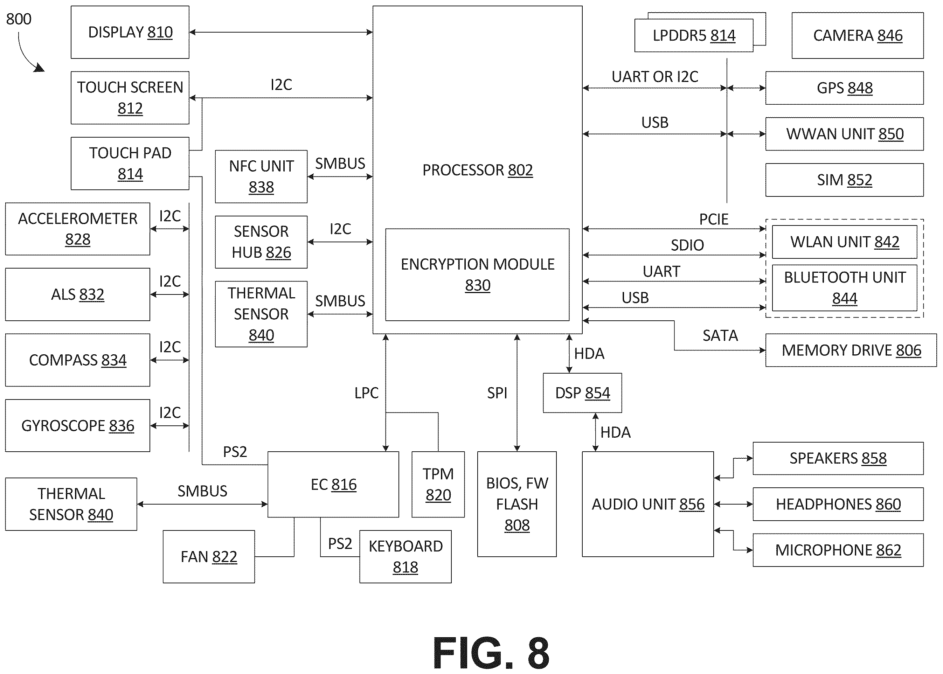

FIG. 8 is a block diagram illustrating an electronic device 800 for utilizing a processor 802, according to aspects of the disclosure. In some embodiments, electronic device 800 can be, for example, and without limitation, a notebook, a tower server, a rack server, a blade server, a laptop, a desktop, a tablet, a mobile device, a phone, an embedded computer, or any other suitable electronic device.

In some embodiments, electronic device 800 can include, without limitation, processor 802 communicatively coupled to any suitable number or kind of components, peripherals, modules, or devices. In some embodiments, processor 802 coupled using a bus or interface, such as an Inter-Integrated Circuit (I2C) bus, a System Management Bus (SMBus), a Low Pin Count (LPC) bus, a Serial Peripheral Interface (SPI), a High Definition Audio (HDA) bus, a Serial Advance Technology Attachment (SATA) bus, a Universal Serial Bus (USB) (including USB 1.0/1/1, USB 2.0, USB 3.0/3.1 Gen1/3.1 Gen2, and USB 4), or a Universal Asynchronous Receiver/Transmitter (UART) bus. In some embodiments, FIG. 8 illustrates a system, which includes interconnected hardware devices or "chips," whereas in other embodiments, FIG. 8 can illustrate an exemplary System on a Chip (SoC). In some embodiments, devices illustrated in FIG. 8 can be interconnected with proprietary interconnects, standardized interconnects (e.g., PCIe), or some combination thereof. In some embodiments, one or more components of FIG. 8 are interconnected using compute express link (CXL) interconnects.

In some embodiments, FIG. 8 can include a display 810, a touch screen 812, a touch pad 814, a Near Field Communications unit (NFC) 838, a sensor hub 826, a thermal sensor 840, an Express Chipset (EC), such as EC 816, a Trusted Platform Module (TPM), such as TPM 820, BIOS/firmware(FW)/flash memory, such as BIOS, FW Flash 808, a DSP 854, a memory drive 806 such as a Solid State Disk (SSD) or a Hard Disk Drive (HDD), a wireless local area network unit (WLAN), such as WLAN unit 842, a Bluetooth unit 844, a Wireless Wide Area Network unit (WWAN), such as WWAN unit 850, a Global Positioning System (GPS) 848, a camera (USB 3.0 camera) 846, such as a USB 3.0 camera, and/or a Low Network bandwidth Double Data Rate (LPDDR) memory unit, such as LPDDR5 804 implemented in, for example, LPDDR5 standard. These components can each be implemented in any suitable manner.

In some embodiments, other components can be communicatively coupled to processor 802 through the components discussed above. In some embodiments, processor 802 can include an encryption module 830. In some embodiments, an accelerometer 828, Ambient Light Sensor (ALS), such as ALS 832, compass 834, and a gyroscope 836 can be communicatively coupled to sensor hub 826. In some embodiments, thermal sensor 840, a fan 822, a keyboard 818, and a touch pad 814 can be communicatively coupled to EC 816. In some embodiments, speakers 858, headphones 860, and microphone 862 can be communicatively coupled to an audio unit 856 which can, in turn, be communicatively coupled to DSP 854. In some embodiments, audio unit 856 can include, for example, and without limitation, an audio coder/decoder (codec) and a class-D amplifier. In some embodiments, a subscriber identification module (SIM) card, such as SIM 852 can be communicatively coupled to WWAN unit 850. In some embodiments, components such as WLAN unit 842 and Bluetooth unit 844, as well as WWAN unit 850 can be implemented in a Next Generation Form Factor (NGFF).

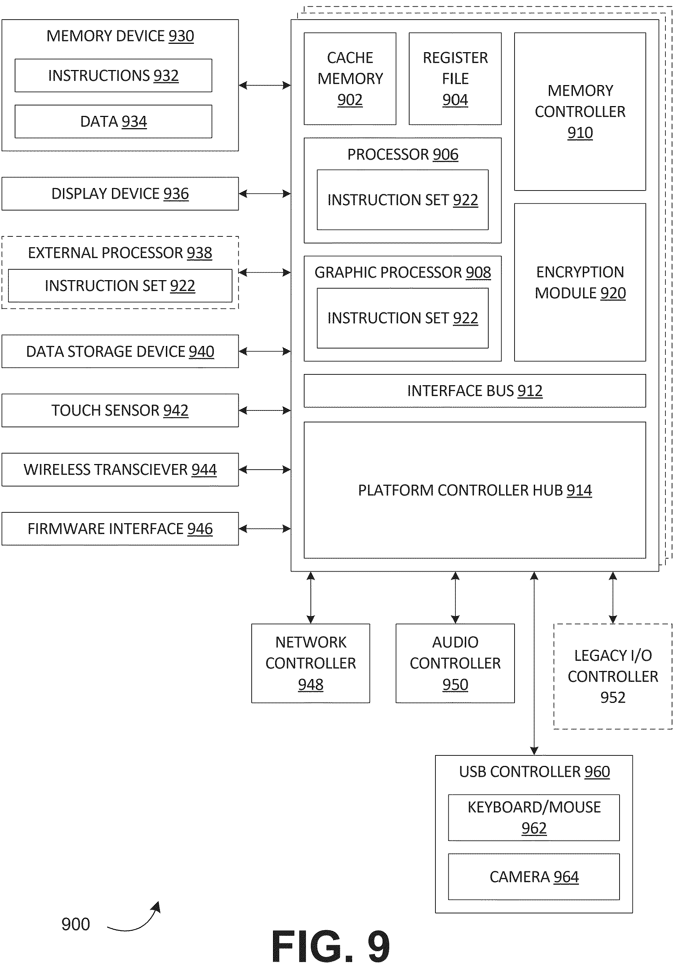

**FIG. 9** is a block diagram of a processing system 900, according to aspects of the disclosure. In some embodiments, the processing system 900 includes cache memory 902, register file 904, processors 906, graphics processors 908, memory controller 910, interface bus 912, platform controller hub 914, and an encryption module 920. Processing system 900 can be a single processor desktop system, a multiprocessor workstation system, or a server system having a large number of processors 906 or graphics processors 908. In some embodiments, the processing system 900 is a processing platform incorporated within a system-on-a-chip (SoC) integrated circuit for use in mobile, handheld, or embedded devices.

In some embodiments, the processing system 900 can include, or be incorporated within a server-based gaming platform, a game console, including a game and media console, a mobile gaming console, a handheld game console, or an online game console. In some embodiments, the processing system 900 is a mobile phone, smart phone, tablet computing device, or mobile Internet device. In some embodiments, the processing system 900 can also include, couple with, or be integrated within, a wearable device, such as a smart watch wearable device, smart eyewear device, augmented reality device, or virtual reality device. In some embodiments, the processing system 900 is a television or set-top box device having one or more processors 906 and a graphical interface generated by one or more graphics processors 908.

In some embodiments, one or more processors 906 each include one or more of the processor cores to process instructions which, when executed, perform operations for system and user software. In some embodiments, one or more processors 906 and/or one or more graphics processors can be configured to process a portion of the instruction set 922. In some embodiments, Instruction set 922 can facilitate Complex Instruction Set Computing (CISC), Reduced Instruction Set Computing (RISC), or computing via a Very Long Instruction Word (VLIW). In some embodiments, processor cores can each process a different instruction set from Instruction set 922, which can include instructions to facilitate emulation of other instruction sets (not illustrated). In some embodiments, processor cores can also include other processing devices, such as a Digital Signal Processor (DSP).

In some embodiments, processors 906 includes cache memory 902. In some embodiments, processors 906 can have a single internal cache or multiple levels of internal cache. In some embodiments, cache memory 902 is shared among various components of processors 906. In some embodiments, processors 906 also uses an external cache (e.g., a Level-3 (L3) cache or Last Level Cache (LLC)) (not illustrated), which can be shared among processor cores using known cache coherency techniques. In some embodiments, register file 904 is additionally included in processors 906, which can include different types of registers for storing different types of data (e.g., integer registers, floating-point registers, status registers, and an instruction pointer register). In some embodiments, register file 904 can include general-purpose registers or other registers.

In some embodiments, one or more processors 906 are coupled with one or more interface bus 912 to transmit communication signals such as address, data, or control signals between processor cores and other components in processing system 900. In some embodiments, interface bus 912, in one embodiment, can be a processor bus, such as a version of a Direct Media Interface (DMI) bus. In some embodiments, interface bus 912 is not limited to a DMI bus, and can include one or more peripheral component interconnect (PCI) buses (e.g., PCI, PCI Express), memory busses, or other types of interface busses. In some embodiments, processors 906 include an integrated memory controller (e.g., memory controller 910) and a platform controller hub 914 (PCH). In some embodiments, memory controller 910 facilitates communication between a memory device and other components of the processing system 900, while platform controller hub 914 provides connections to I/O devices via a local I/O bus.

In some embodiments, the memory device 930 can be a dynamic random-access memory (DRAM) device, a static random-access memory (SRAM) device, a flash memory device, a phase-change memory device, or some other memory device having suitable performance to serve as process memory. In some embodiments, the memory device 930 can operate as system memory for processing system 900 to store instructions 932 and data 934 for use when one or more processors 906 executes an application or process. In some embodiments, memory controller 910 also optionally couples with an external processor 938, which can communicate with one or more graphics processors 908 in processors 906 to perform graphics and media operations. In some embodiments, a display device 936 can connect to processors 906. In some embodiments, the display device 936 can include one or more of an internal display device, as in a mobile electronic device or a laptop device, or an external display device attached via a display interface (e.g., DisplayPort, etc.). In some embodiments, display device 936 can include a head-mounted display (HMD) such as a stereoscopic display device for use in virtual reality (VR) applications or augmented reality (AR) applications.

In some embodiments, the platform controller hub 914 enables peripherals to connect to memory device 930 and processors 906 via a high-speed I/O bus. In some embodiments, I/O peripherals include, but are not limited to, a data storage device 940 (e.g., hard disk drive, flash memory, etc.), a touch sensor 942, a wireless transceiver 944, firmware interface 946, a network controller 948, or an audio controller 950.

In some embodiments, the data storage device 940 can connect via a storage interface (e.g., SATA) or via a peripheral bus, such as a PCI bus (e.g., PCI, PCI Express). In some embodiments, touch sensor 942 can include touch screen sensors, pressure sensors, or fingerprint sensors. In some embodiments, wireless transceiver 944 can be a Wi-Fi transceiver, a Bluetooth transceiver, or a mobile network transceiver such as a 3G, 4G, Long Term Evolution (LTE), 5G, or 6G transceiver. In some embodiments, firmware interface 946 enables communication with system firmware and can be, for example, a unified extensible firmware interface (UEFI). In some embodiments, the network controller 948 can enable a network connection to a wired network. In some embodiments, a high-performance network controller (not illustrated) couples with interface bus 912. In some embodiments, audio controller 950 can be a multi-channel high-definition audio controller. In some embodiments, the processing system 900 includes an optional legacy I/O controller 952 for coupling legacy (e.g., Personal System-2 (PS/2)) devices to the processing system 900. In some embodiments, the platform controller hub 914 can also connect to one or more Universal Serial Bus (USB) controllers, such as USB controller 960 to connect input devices, such as a keyboard and mouse combination (keyboard/mouse 962), a camera 964, or other USB input devices.

In some embodiments, an instance of memory controller 910 and platform controller hub 914 can be integrated into a discreet external graphics processor, such as external processor 938. In some embodiments, the platform controller hub 914 and/or memory controller 910 can be external to one or more processors 906. For example, in some embodiments, the processing system 900 can include an external memory controller (e.g., memory controller 910) and the platform controller hub 914, which can be configured as a memory controller hub and peripheral controller hub within a system chipset that is in communication with the processors 906.

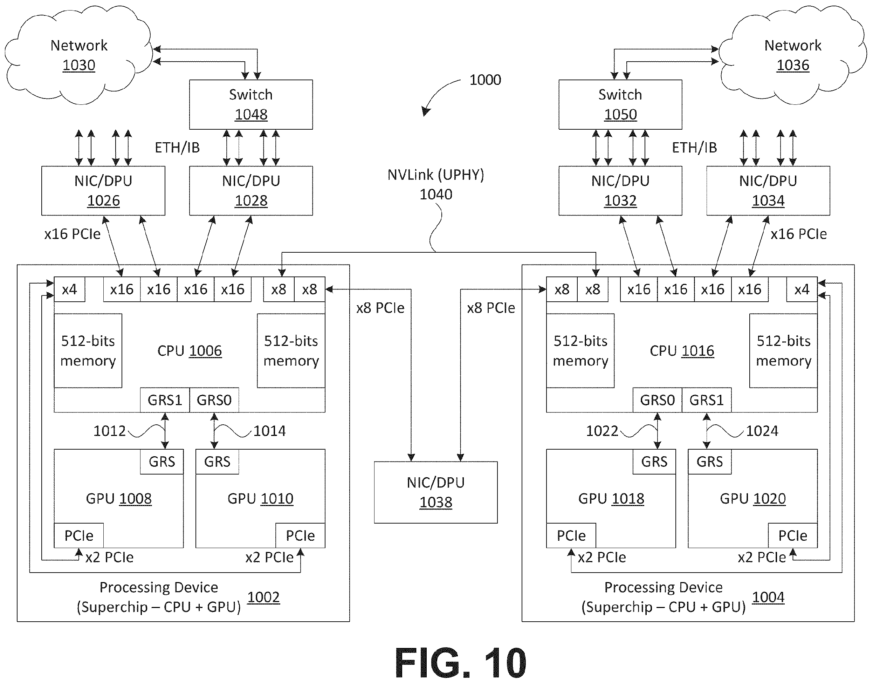

**FIG. 10** is a block diagram that schematically illustrates a computing system 1000, e.g., a data center or a High-Performance Computing (HPC) cluster, in accordance with an embodiment that is described herein. System 1000 comprises a plurality of subsystems, e.g. multiple processing devices coupled to each other, multiple network devices, and multiple networks, according to at least one embodiment. Computing system 1000 is designed with multiple integrated circuits (referred to as processing devices), where each integrated circuit can include one or more CPUs and GPUs, forming a powerful and flexible architecture.

The various processing devices are interconnected via an NVLink or other high-speed interconnect, enabling high-speed communication between the subsystems, and are also connected through a NIC or DPU to ensure efficient data transfer across computing system 1000 and to one or more external networks 1030, 1036. In the present example, system 1000 comprises a packet switch 1048 that connects NIC/DPU 1028 to network 1030, and a packet switch 1050 that connects NIC/DPU 1032 to network 1036.

The coupling of processing devices through NVLink allows for seamless data exchange and parallel processing, enhancing overall computational performance. The processing devices are connected to multiple networks through one or more network interface cards (NICs) or DPUs, enabling the system to handle complex, multi-network tasks with high bandwidth and low latency. This configuration is highly suitable for demanding applications that require significant processing power, such as artificial intelligence (AI), machine learning (ML), and data-intensive computing, while ensuring robust connectivity and scalability across various networked environments. The integrated circuits of the computing system 1000 can include one or more CPUs and one or more GPUs.

**FIG. 10** also demonstrates an example architecture of a multi-GPU architecture. As illustrated in the figure, computing system 1000 includes a processing device 1002 with a multi-GPU architecture. In particular, processing device 1002 may be a system-on-chip and includes multiple subsystems such as a CPU 1006, a GPU 1008, and a GPU 1010. CPU 1006 can be coupled to GPU 1008 via a die-to-die (D2D) or chip-to-chip (C2C) interconnect 1012, such as a Ground-Referenced Signaling interconnect (GRS interconnect). CPU 1006 can be coupled to GPU 1010 via a D2D or C2C interconnect 1014. CPU 1006 can also couple to GPU 1008 and GPU 1010 via PCIe interconnects.

CPU 1006 can be coupled to one or more NICs or DPUs, which are coupled to one or more networks. For example, as illustrated in Fig. 3, CPU 1006 is coupled to a first NIC/DPU 1026, which is coupled to a network 1030. CPU 1006 is also coupled to a second NIC/DPU 1028, which is coupled to network 1030 via switch 1048. NIC/DPU 1026 and NIC/DPU 1028 can be coupled to network 1030 over Ethernet (ETH), NVLINK or InfiniBand (IB) connections, for example.

Computing system 1000 also includes a processing device 1004 with a multi-GPU architecture. In particular, processing device 1004 includes multiple subsystems including a CPU 1016, a GPU 1018, and a GPU 1020. CPU 1016 can be coupled to GPU 1018 via an D2D or C2C interconnect 1022. CPU 1016 can be coupled to GPU 1020 via a D2D or C2C interconnect 1024. CPU 1016 can also couple to GPU 1018 and GPU 1020 via PCIe interconnects. CPU 1016 can be coupled to one or more NICs or DPUs, which are coupled to one or more networks. For example, as illustrated in Fig. 3, CPU 1016 is coupled to a first NIC/DPU 1032, which is coupled to a network 1036. CPU 1016 is also coupled to a second NIC/DPU 1034, which is coupled to network 1036 via switch 1050. NIC/DPU 1032 and NIC/DPU 1034 can be coupled to network 1036 over Ethernet (ETH), NVLINK or InfiniBand (IB) connections.

In at least one embodiment, processing device 1002 and processing device 1004 can communication with each other via a NIC/DPU 1038, such as over PCIe interconnects. Processing device 1002 and processing device 1004 can also communicate with each other over a high-bandwidth communication interconnects 1040, such as an NVLink interconnect or other high-speed interconnects. The packet switches in Fig. 3 may comprise, for example, Nvidia Quantum-2 switches. The NICs/DPUs in the figure may comprise, for example, Nvidia Bluefield DPUs.

The computing system 1000 includes various types of interconnects. Each of the interconnects includes the transceivers or receivers that include the controller 240 and encryption module 230 of **FIG. 2,** as described herein.

In at least one embodiment, the computing system 1000 is used for high-speed network communication and includes a processing unit (e.g., CPU 1006, GPU 1008, GPU 1008, CPU 1016, GPU 1018, GPU 1020, NIC/DPU 1026, NIC/DPU 1028, NIC/DPU 1032, NIC/DPU 1034, or NIC/DPU 1038), and a network interface coupled to the processing unit. The network interface includes a transceiver circuit operatively coupled to a controller. The transceiver circuit includes an encryption module which is controlled by the controller, as described above. The encryption keys are rotated based on commands received at the encryption module from the controller. The connection between the controller and the encryption module is a local, trusted connection. The communication network that connects the processing device 1002 to the processing device 1004 does not include a connection to the controller, or otherwise process or send encryption keys.

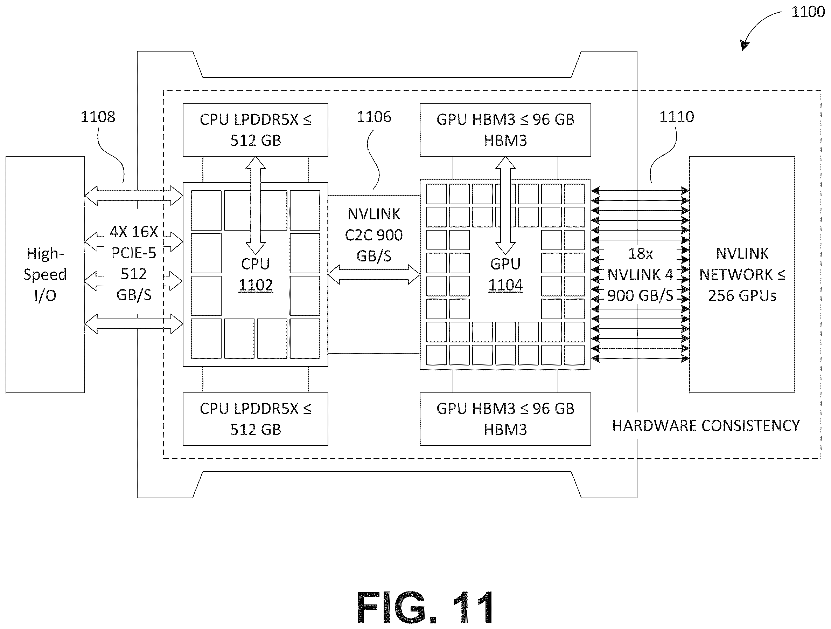

**FIG. 11** is a block diagram of a computing system 1100 having a CPU 1102 and a GPU 1104 in a single integrated circuit according to at least one embodiment. The computing system 1100 can be a highly integrated design where a CPU 1102 and GPU 1104 are connected on a single integrated circuit, utilizing an NVLink C2C (Chip-to-Chip) interconnect 1106 to enable fast, low-latency communication between the two processing units. This close integration allows for efficient data transfer and parallel processing between the CPU 1102 and GPU 1104, optimizing performance for complex computational tasks. The GPU elements within the computing system 1100 can be interconnected using an NVLink network, allowing for scalability to include multiple GPU elements (e.g., up to 256 as illustrated), creating a powerful, unified processing environment ideal for large-scale AI, ML, and high-performance computing applications. The NVLink network can be a GPU fabric of high-bandwidth communication interconnects 1110. Additionally, the computing system 1100 can be designed to interface with a high-speed I/O through PCIe interconnects 1108, ensuring rapid data transfer to and from external devices, further enhancing the system's capabilities in handling data-intensive tasks and providing robust connectivity to peripheral components. It should be noted that the C2C interconnects 1106 can be considered D2D interconnects since the CPU 1102 and the GPU 1104 are located on the same integrated circuit. The integrated circuit can include CPU memory (also referred to as main memory) and GPU memory, which are accessible by the CPU 1102 and the GPU 1104, respectively, over high-speed interconnects. The computing system 1100 can bring together performance of the GPU 1104 with the versatility of the CPU 1102. The CPU 1102 can be connected with a high-bandwidth and memory coherent C2C interconnects 1106 in a single integrated circuit. The computing system 1100 can support a link switch system.

The computing system 1100 includes various types of interconnects. Each of the interconnects includes the transceivers or receivers that include the controller 240 and encryption module 230 of **FIG. 2,** as described herein.

In at least one embodiment, the computing system 1100 is used for high-speed network communication and includes a processing unit (e.g., CPU 1102, GPU 1104, NVLink network), and a network interface coupled to the processing unit. The network interface can include the controller as described above with respect to **FIG. 10.**

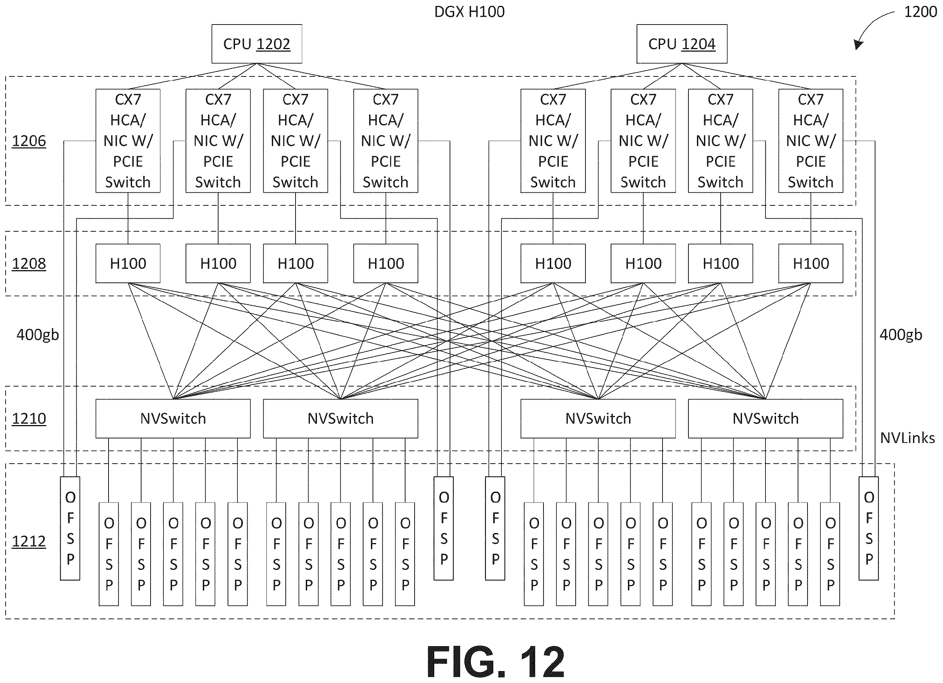

**FIG. 12** is a block diagram of a computing system 1200 having tensor core GPUs 1208 according to at least one embodiment. The computing system 1200 can be an NVIDIA© DGX H100 system which is a high-performance computing platform designed to meet the demands of AI, ML, and deep learning (DL) workloads. The computing system 1200 can include multiple tensor core GPUs 1208 (e.g., NVIDIA H100 Tensor Core GPUs). The tensor core GPUs 1208 can each be one of the integrated circuits described above with respect to **FIG. 10.** The tensor core GPUs 1208 can be optimized for AI/ML/DL applications, offering exceptional performance for deep learning training, inference, and high-performance computing tasks. The tensor core GPUs 1208 within the computing system 1200 are interconnected using high-speed communication interfaces like NVLinks, enabling rapid data transfer between them, which is crucial for handling large-scale AI models and datasets with low latency. This computing system 1200 is designed for scalability, allowing for the integration of additional GPUs as required, making it versatile enough for research, development, and deployment in data centers for production AI workloads. Each GPU is equipped with Tensor Cores, specialized processing units that accelerate matrix operations, a fundamental component of AI and deep learning algorithms. These Tensor Cores enable the system to perform mixed-precision calculations efficiently, balancing speed and accuracy. Given the power consumption and heat generation of multiple tensor core GPUs 1208, the computing system 1200 can include advanced cooling solutions and power management features to ensure safe operation while maintaining peak performance. It is supported by a comprehensive software ecosystem, including NVIDIA's CUDA programming model, AI frameworks like TensorFlow and PyTorch, and other HPC and AI software tools, which enable developers and researchers to harness the full power of the tensor core GPUs 1208 for their specific applications. The computing system 1200 is ideally suited for large-scale AI model training, real-time inference, scientific simulations, data analytics, and other compute-intensive tasks that require massive parallel processing power.

The tensor core GPUs 1208 can be coupled to multiple CPUs, such as CPU 1202 and CPU 1204, using switches 1206 (e.g., CX7 HCA/NIC with PCIe switch). The tensor core GPUs 1208 can be coupled to each other via switches 1210 (e.g., NV-Switches). The switches 1206 and switches 1210 can be coupled to high-speed transceiver modules 1212. The high-speed transceiver modules 1212 can be Octal Small Form-factor Pluggable (OSFP) modules. OSFP modules refer to high-speed transceiver modules designed for rapid data communication, particularly in environments requiring significant bandwidth, such as data centers and high-performance computing systems. These modules support extremely high data rates, typically up to 400 Gbps per module, with future capabilities extending to 800 Gbps or more. OSFP modules interface with the system via the PCIe interface, enabling fast and efficient data transfer between the integrated CPU-GPU components and external networks or other connected systems. Their hot-pluggable nature allows for easy insertion or removal without the need to power down the system, offering flexibility and ease of maintenance, which is crucial in critical-uptime environments. Additionally, OSFP modules are designed for high density, maximizing the number of high-speed connections within limited space, such as in densely packed server racks. By adhering to the latest networking standards, OSFP modules ensure the computing system 1200 remains capable of meeting increasing data demands and can be upgraded to support future advancements in network speeds, thus contributing to the system's overall performance and scalability.

In at least one embodiment, the computing system 1200 can be considered a data-network configuration with full-bandwidth intra-server NVLinks. In this example, all eight tensor core GPUs 1208 can simultaneously saturate eighteen NVLinks to other GPUs within the server. The bandwidth is limited by over-subscription from multiple other GPUs. In another embodiments, data-network configuration can be a half-bandwidth intra-server NVLinks. In this example, all eight tensor core GPUs 1208 can half-subscribe eighteen NVLinks to GPUs in other servers. Four tensor core GPUs 1208 can saturate eighteen NVLinks to GPUs in other servers. This is equivalent of full-bandwidth on AllReduce with Scalable Hierarchical Aggregation and Reduction Protocol (SHARP). The reduction in all-2-all (All2All) bandwidth is a balance with server complexity and costs. In at least one embodiment, all eight tensor core GPUs 1208 can independently transfer data, using Remote Direct Memory Access (RDMA) protocol, over its own dedicated switch (e.g., 400 Gb/s HCA/NIC) in an multi-rail InfiniBand/Ethernet configuration. In this example, 800 GBps of aggregate full-duplex to non-NVLink network devices.

The computing system 1200 includes various types of interconnects. Each of the interconnects includes the transceivers or receivers that include the controller 240 and encryption module 230 of **FIG. 2,** as described herein.

In at least one embodiment, the computing system 1200 is used for high-speed network communication and includes a processing unit (e.g., CPU 1202, CPU 1202, switches 1206, tensor core GPUs 1208, switches 1210, high-speed transceiver modules 1212), and a network interface coupled to the processing unit. The network interface can the controller as described above with respect to **FIG. 10.**

Other variations are within the spirit of the present disclosure. Thus, while disclosed techniques are susceptible to various modifications and alternative constructions, certain illustrated embodiments thereof are shown in drawings and have been described above in detail. It should be understood, however, that there is no intention to limit the disclosure to a specific form or forms disclosed, on the contrary, the intention is to cover all modifications, alternative constructions, and equivalents falling within the spirit and scope of the disclosure, as defined in appended claims.

Use of terms "a" and "an" and "the" and similar referents in the context of describing disclosed embodiments (especially in the context of following claims) are to be construed to cover both singular and plural, unless otherwise indicated herein or clearly contradicted by context, and not as a definition of a term. Terms "comprising," "having," "including," and "containing" are to be construed as open-ended terms (meaning "including, but not limited to,") unless otherwise noted. The term "connected," when unmodified and referring to physical connections, is to be construed as partly or wholly contained within, attached to, or joined together, even if there is something intervening. Recitations of ranges of values herein are merely intended to serve as a shorthand method of referring individually to each separate value falling within the range, unless otherwise indicated herein, and each separate value is incorporated into the specification as if it were individually recited herein.

Use of the term "set" (e.g., "a set of items") or "subset," unless otherwise noted or contradicted by context, is to be construed as a nonempty collection comprising one or more members. Further, unless otherwise noted or contradicted by context, the term "subset" of a corresponding set does not necessarily denote a proper subset of the corresponding set, but the subset and corresponding set can be equal.

Conjunctive language, such as phrases of the form "at least one of A, B, and C," or "at least one of A, B, and C," unless specifically stated otherwise or otherwise clearly contradicted by context, is otherwise understood with the context as used in general to present that an item, term, etc., can be either A or B or C, or any nonempty subset of a set of A and B and C. For instance, in an illustrative example of a set having three members, conjunctive phrases "at least one of A, B, and C" and "at least one of A, B, and C" refer to any of the following sets: {A}, {B}, {C}, {A, B}, {A, C}, {B, C}, {A, B, C}. Thus, such conjunctive language is not generally intended to imply that certain embodiments require at least one of A, at least one of B, and at least one of C each to be present. In addition, unless otherwise noted or contradicted by context, the term "plurality" indicates a state of being plural (e.g., "a plurality of items" indicates multiple items). A plurality is at least two items but can be more when so indicated either explicitly or by context. Further, unless stated otherwise or otherwise clear from context, the phrase "based on" means "based at least in part on" and not "based solely on."

Operations of processes described herein can be performed in any suitable order unless otherwise indicated herein or otherwise clearly contradicted by context. In some embodiments, a process such as those processes described herein (or variations and/or combinations thereof) is performed under the control of one or more computer systems configured with executable instructions and is implemented as code (e.g., executable instructions, one or more computer programs or one or more applications) executing collectively on one or more processors, by hardware or combinations thereof. In some embodiments, code is stored on a computer-readable storage medium, for example, in form of a computer program comprising a plurality of instructions executable by one or more processors. In some embodiments, a computer-readable storage medium is a non-transitory computer-readable storage medium that excludes transitory signals (e.g., a propagating transient electric or electromagnetic transmission) but includes non-transitory data storage circuitry (e.g., buffers, cache, and queues) within transceivers of transitory signals. In some embodiments, code (e.g., executable code or source code) is stored on a set of one or more non-transitory computer-readable storage media having stored thereon executable instructions (or other memory to store executable instructions) that, when executed (i.e., as a result of being executed) by one or more processors of a computer system, cause a computer system to perform operations described herein. A set of non-transitory computer-readable storage media, in some embodiments, comprises multiple non-transitory computer-readable storage media and one or more of individual non-transitory storage media of multiple non-transitory computer-readable storage media lacks all of the code while multiple non-transitory computer-readable storage media collectively store all of the code. In some embodiments, executable instructions are executed such that different instructions are executed by different processors - for example, a non-transitory computer-readable storage medium stores instructions, and a main central processing unit (CPU) executes some of the instructions while a graphics processing unit (GPU) executes other instructions. In some embodiments, different components of a computer system have separate processors, and different processors execute different subsets of instructions.

Accordingly, in some embodiments, computer systems are configured to implement one or more services that singly or collectively perform operations of processes described herein, and such computer systems are configured with applicable hardware and/or software that enable the performance of operations. Further, a computer system that implements at least one embodiment of present disclosure is a single device and, in another embodiment, is a distributed computer system comprising multiple devices that operate differently such that distributed computer system performs operations described herein and such that a single device does not perform all operations.

Use of any and all examples or exemplary language (e.g., "such as") provided herein is intended merely to better illuminate embodiments of the disclosure and does not pose a limitation on the scope of the disclosure unless otherwise claimed. No language in the specification should be construed as indicating any non-claimed element as essential to the practice of the disclosure.

All references, including publications, patent applications, and patents, cited herein are hereby incorporated by reference to the same extent as if each reference were individually and specifically indicated to be incorporated by reference and were set forth in its entirety herein.

In description and claims, the terms "coupled" and "connected," along with their derivatives, can be used. It should be understood that these terms cannot be intended as synonyms for each other. Rather, in particular examples, "connected" or "coupled" can be used to indicate that two or more elements are in direct or indirect physical or electrical contact with each other. "Coupled" can also mean that two or more elements are not in direct contact with each other but yet still cooperate or interact with each other.

Unless specifically stated otherwise, it can be appreciated that throughout specification terms such as "processing," "computing," "calculating," "determining," or like, refer to action and/or processes of a computer or computing system or similar electronic computing device, that manipulates and/or transform data represented as physical, such as electronic, quantities within computing system's registers and/or memories into other data similarly represented as physical quantities within computing system's memories, registers or other such information storage, transmission or display devices.

In a similar manner, the term "processor" can refer to any device or portion of a device that processes electronic data from registers and/or memory and transform that electronic data into other electronic data that can be stored in registers and/or memory. As non-limiting examples, a "processor" can be a CPU or a GPU. A "computing platform" can comprise one or more processors. As used herein, "software" processes can include, for example, software and/or hardware entities that perform work over time, such as tasks, threads, and intelligent agents. Also, each process can refer to multiple processes for carrying out instructions in sequence or in parallel, continuously, or intermittently. The terms "system" and "method" are used herein interchangeably insofar as a system can embody one or more methods, and methods can be considered a system.

In the present document, references can be made to obtaining, acquiring, receiving, or inputting analog or digital data into a subsystem, computer system, or computer-implemented machine. Obtaining, acquiring, receiving, or inputting analog and digital data can be accomplished in a variety of ways, such as by receiving data as a parameter of a function call or a call to an application programming interface. In some implementations, the process of obtaining, acquiring, receiving, or inputting analog or digital data can be accomplished by transferring data via a serial or parallel interface. In another implementation, the process of obtaining, acquiring, receiving, or inputting analog or digital data can be accomplished by transferring data via a computer network from providing entity to acquiring entity. References can also be made to providing, outputting, transmitting, sending, or presenting analog or digital data. In various examples, the process of providing, outputting, transmitting, sending, or presenting analog or digital data can be accomplished by transferring data as an input or output parameter of a function call, a parameter of an application programming interface, or an interprocess communication mechanism.

Although the discussion above sets forth example implementations of described techniques, other architectures can be used to implement described functionality and are intended to be within the scope of this disclosure. Furthermore, although specific distributions of responsibilities are defined above for purposes of discussion, various functions and responsibilities might be distributed and divided in different ways, depending on circumstances.

Furthermore, although the subject matter has been described in language specific to structural features and/or methodological acts, it is to be understood that subject matter claimed in appended claims is not necessarily limited to specific features or acts described. Rather, specific features and acts are disclosed as exemplary forms of implementing the claims.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

The disclosure of this application also includes the following numbered clauses:

Clause 1. A device comprising:

a transmitter coupled to a communication network;
a first controller coupled to the transmitter via a control channel; and
control logic coupled to the first controller and the transmitter, the control logic to:

determine whether the first controller is synchronized with a second controller of a second device;
cause the transmitter to transmit a first number of communications based on a first encryption key in response to a determination that the first controller is synchronized with the second controller;
determine whether the first number of communications satisfies a first threshold condition based on a first encryption interval corresponding to the first encryption key; and
cause the transmitter to transmit a second number of communications based on a second encryption key in response to a determination that the first number of communications satisfies the first threshold condition.

Clause 2. The device of clause 1, further comprising an encryption module coupled to the transmitter, the encryption module comprising:

a key buffer comprising the first encryption key and the second encryption key; and
an encryption block coupled to the key buffer, wherein the control logic further to:

encrypt the first number of communications with the first encryption key at the encryption block based on the first encryption interval, and

encrypt the second number of communications with the second encryption key at the encryption block based on a second encryption interval.

Clause 3. The device of clause 2, wherein the encryption module further comprises a key rotation element comprising a first indication of the first encryption interval, the control logic further to: increment a first encryption interval count for each communication of the first number of communications transmitted by the transmitter, wherein a determination that the first number of communications satisfies the first threshold condition is based on determining that the first encryption interval count satisfies the first encryption interval.

Clause 4. The device of clause 3, wherein the first encryption interval count is stored in a counter register, the control logic further to:

reset the counter register to a default value in response to a determination that the first number of communications satisfies the first threshold condition; and increment a second encryption count for each communication of the second number of communications transmitted by the transmitter.

Clause 5. The device of clause 1, further comprising: a receiver coupled to the communication network, the receiver coupled to the first controller via the control channel, wherein the control logic to:

cause the receiver to receive a third number of communications based on a third encryption key; determine whether the third number of communications satisfies a third threshold condition based on a third encryption interval corresponding to the third encryption key; and cause the receiver to receive a fourth number of communications based on a fourth encryption key in response to a determination that the third number of communications satisfies the third threshold condition.

Clause 6. The device of clause 5, wherein the first encryption key is the same as the third encryption key, the third threshold condition is equal to the first threshold condition, and the third number of communications is equal to the first number of communications.

Clause 7. The device of clause 5, wherein the first encryption key is the same as the third encryption key, the third threshold condition is equal to the first threshold condition, and the third number of communications is not equal to the first number of communications, wherein the control logic to: indicate an encryption failure of the communication network.

Clause 8. The device of clause 5, the control logic further to:

determine the third number of communications does not satisfy the third threshold condition; fail to decrypt a received communication of the third number of communications using the third encryption key; and indicate an encryption failure of the communication network.

Clause 9. A system comprising:

a first controller coupled to a transmitter via a first control channel; a second controller coupled to a receiver via a second control channel, wherein the receiver is coupled to the transmitter via a communication network; and control logic coupled to the first controller and the second controller, the control logic to:

determine whether the first controller is synchronized with a second controller of a second device; cause the transmitter to transmit a first number of communications based on a first encryption key in response to a determination that the first controller is synchronized with the second controller; determine whether the first number of communications satisfies a first threshold condition based on a first encryption interval corresponding to the first encryption key; and cause the transmitter to transmit a second number of communications based on a second encryption key in response to a determination that the first number of communications satisfies the first threshold condition.

Clause 10. The system of clause 9, further comprising an encryption module coupled to the transmitter, the encryption module comprising:

a key buffer comprising the first encryption key and the second encryption key; and an encryption block coupled to the key buffer, wherein the control logic further to:

encrypt the first number of communications with the first encryption key at the encryption block based on the first encryption interval, and

encrypt the second number of communications with the second encryption key at the encryption block based on a second encryption interval.

Clause 11. The system of clause 10, wherein the encryption module further comprises a key rotation element comprising a first indication of the first encryption interval, the control logic further to: increment a first encryption interval count for each communication of the first number of communications transmitted by the transmitter, wherein a determination that the first number of communications satisfies the first threshold condition is based on determining that the first encryption interval count satisfies the first encryption interval.

Clause 12. The system of clause 11, wherein the first encryption interval count is stored in a counter register, the control logic further to:

reset the counter register to a default value in response to a determination that the first number of communications satisfies the first threshold condition; and

increment a second encryption count for each communication of the second number of communications transmitted by the transmitter.

Clause 13. The system of clause 9, further comprising:
a receiver coupled to the communication network, the receiver coupled to the first controller via the control channel, wherein the control logic to:

cause the receiver to receive a third number of communications based on a third encryption key;

determine whether the third number of communications satisfies a third threshold condition based on a third encryption interval corresponding to the third encryption key; and

cause the receiver to receive a fourth number of communications based on a fourth encryption key in response to a determination that the third number of communications satisfies the third threshold condition.

Clause 14. The system of clause 13, wherein the first encryption key is the same as the third encryption key, the third threshold condition is equal to the first threshold condition, and the third number of communications is equal to the first number of communications.

Clause 15. The system of clause 13, wherein the first encryption key is the same as the third encryption key, the third threshold condition is equal to the first threshold condition, and the third number of communications is not equal to the first number of communications, wherein the control logic to:
indicate an encryption failure of the communication network.

Clause 16. The system of clause 13, the control logic further to:

determine the third number of communications does not satisfy the third threshold condition;
fail to decrypt a received communication of the third number of communications using the third encryption key; and
indicate an encryption failure of the communication network.

Clause 17. A method comprising:

determining whether a first controller is synchronized with a second controller;
causing a transmitter coupled to the first controller to transmit a first number of communications based on a first encryption key via a communication network in response to a determination that the first controller is synchronized with the second controller;
determining whether the first number of communications satisfies a first threshold condition based on a first encryption interval corresponding to the first encryption key; and
causing the transmitter to transmit a second number of communications based on a second encryption key in response to a determination that the first number of communications satisfies the first threshold condition.

Clause 18. The method of clause 17, further comprising:

encrypting the first number of communications with the first encryption key; and
encrypting the second number of communications with the second encryption key.

Clause 19. The method of clause 17, further comprising:
incrementing an encryption interval count for each communication of the first number of communications transmitted by the transmitter, wherein a determination that the first number of communications satisfies the first threshold condition is based on determining that the first encryption interval count satisfies the first encryption interval.

Clause 20. The method of clause 17, further comprising:

> causing a receiver to receive a third number of communications based on a third encryption key;
> determining whether the third number of communications satisfies a third threshold condition based on a third encryption interval corresponding to the third encryption key; and
> causing the receiver to receive a fourth number of communications based on a fourth encryption key in response to a determination that the third number of communications satisfies the third threshold condition.

Clause 21. A system for high-speed network communication, the system comprising:

> one or more processing units; and
> a network interface coupled to the one or more processing units, wherein the network interface comprises a transmitter device and a first controller coupled to the transmitter device by a control channel, wherein the transmitter device to transmit data signal via a communication network, the first controller to:
>
> > determine whether the first controller is synchronized with a respective controller of a second device;
> > cause the transmitter device to transmit a first number of communications based on a first encryption key in response to a determination that the first controller is synchronized with the respective controller;
> > determine whether the first number of communications satisfies a first threshold condition based on a first encryption interval corresponding to the first encryption key; and
> > cause the transmitter device to transmit a second number of communications based on a second encryption key in response to a determination that the first number of communications satisfies the first threshold condition.

Clause 22. The system of clause 21, wherein the transmitter device further comprises an encryption module comprising:

> a key buffer comprising the first encryption key and the second encryption key; and
> an encryption block coupled to the key buffer, wherein the controller further to:
>
> > encrypt the first number of communications with the first encryption key at the encryption block based on the first encryption interval, and
encrypt the second number of communications with the second encryption key at the encryption block based on a second encryption interval.

Clause 23. The system of clause 22, wherein the encryption module further comprises a key rotation element comprising a first indication of the first encryption interval, the first controller further to:
increment a first encryption interval count for each communication of the first number of communications sent by the transmitter device, wherein a determination that the first number of communications satisfies the first threshold condition is based on determining that the first encryption interval count satisfies the first encryption interval.

Clause 24. The system of clause 23, wherein the first encryption interval count is stored in a counter register, the first controller further to:

> reset the counter register to a default value in response to a determination that the first number of communications satisfies the first threshold condition; and
> increment a second encryption count for each communication of the second number of communications sent by the transmitter device.

Clause 25. The system of clause 21, further comprising:
a receiver device coupled to the communication network, the receiver device coupled to the first controller via the control channel, wherein the first controller to:

> cause the receiver to receive a third number of communications based on a third encryption key;
> determine whether the third number of communications satisfies a third threshold condition based on a third encryption interval corresponding to the third encryption key; and
> cause the receiver to receive a fourth number of communications based on a fourth encryption key in response to a determination that the third number of communications satisfies the third threshold condition.

Clause 26. The system of clause 25, wherein the first encryption key is the same as the third encryption key, the third threshold condition is equal to the first threshold condition, and the third number of communications is equal to the first number of communications.

Clause 27. The system of clause 25, wherein the first encryption key is the same as the third encryption key, the third threshold condition is equal to the first threshold condition, and the third number of communications is not equal to the first number of communications, wherein the first controller to:
indicate an encryption failure of the communication network.

Clause 28. The system of clause 25, the first controller further to:

determine the third number of communications does not satisfy the third threshold condition;
fail to decrypt a received communication of the third number of communications using the third encryption key; and
indicate an encryption failure of the communication network.

Clause 29. A method comprising:

establishing link-level synchronization between a first device and a second device coupled via a communication network;
encrypting by the first device, a first number of communications during a first interval using a first encryption key of a plurality of encryption keys;
transmitting, by the first device, the first number of communications to the second device;
determining whether the first interval has ended;
responsive to determining, at the first device, that the first interval has ended, rotating to a second encryption key of the plurality of encryption keys at the first device while maintaining the link-level synchronization between the first device and the second device; and
responsive to determining, at the second device, that the first interval has ended, rotating to the second encryption key at the second device while maintaining the link-level synchronization between the first device and the second device.

Clause 30. The method of clause 29, further comprising:

encrypting by the first device, a second number of communications during a second interval using the second encryption key;
transmitting by the first device, the second number of communications to the second device; and
responsive to determining the second interval has ended, rotating to a third encryption key of the plurality of encryption keys at the first device while maintaining the link-level synchronization between the first device and the second device.

Clause 31. The method of clause 30, further comprising:

receiving by the second device, the second number of communications from the first device;
decrypting by the second device, the second number of communications during the second interval using the second encryption key; and
responsive to determining the second interval has ended, rotating to the third encryption key at the second device while maintaining the link-level synchronization between the first device and the second device.

Clause 32. The method of clause 29, wherein establishing the link-level synchronization between the first device and the second devices comprises:

initializing, by a controller coupled to the first device and the second device, a first encryption module of the first device with the first encryption key, wherein the first device refrains from transmitting a first indication of the first encryption key to the second device via the communication network; and
initializing, by the controller, a second encryption module of the second device with the first encryption key, wherein the second device refrains from transmitting a second indication of the first encryption key to the first device via the communication network.

Clause 33. The method of clause 32, wherein initializing the first encryption module comprises transmitting by the controller via a control channel, the first encryption key to the first device, and
wherein initializing the second encryption module comprises transmitting by the controller via a control channel, the first encryption key to the second device.

Clause 34. The method of clause 33, wherein the first encryption key corresponds to the first interval, wherein a first indication of the first interval is transmitted by the controller to the first device along with the first encryption key, and
wherein a second indication of the first interval is transmitted by the controller to the second device along with the second encryption key.

**Claims**

1. A device comprising:

a transmitter coupled to a communication network;

a first controller coupled to the transmitter via a control channel; and

control logic coupled to the first controller and the transmitter, the control logic to:

determine whether the first controller is synchronized with a second controller of a second device;

cause the transmitter to transmit a first number of communications based on a first encryption key in response to a determination that the first controller is synchronized with the second controller;

determine whether the first number of communications satisfies a first threshold condition based on a first encryption interval corresponding to the first encryption key; and

cause the transmitter to transmit a second number of communications based on a second encryption key in response to a determination that the first number of communications satisfies the first threshold condition.

2. The device of claim 1, further comprising an encryption module coupled to the transmitter, the encryption module comprising:

a key buffer comprising the first encryption key and the second encryption key; and

an encryption block coupled to the key buffer, wherein the control logic further to:

encrypt the first number of communications with the first encryption key at the encryption block based on the first encryption interval, and

encrypt the second number of communications with the second encryption key at the encryption block based on a second encryption interval.

3. The device of claim 2, wherein the encryption module further comprises a key rotation element comprising a first indication of the first encryption interval, the control logic further to:
increment a first encryption interval count for each communication of the first number of communications transmitted by the transmitter, wherein a determination that the first number of communications satisfies the first threshold condition is based on determining that the first encryption interval count satisfies the first encryption interval.

4. The device of claim 3, wherein the first encryption interval count is stored in a counter register, the control logic further to:

reset the counter register to a default value in response to a determination that the first number of communications satisfies the first threshold condition; and

increment a second encryption count for each communication of the second number of communications transmitted by the transmitter.

5. The device of any preceding claim, further comprising:
a receiver coupled to the communication network, the receiver coupled to the first controller via the control channel, wherein the control logic to:

cause the receiver to receive a third number of communications based on a third encryption key;

determine whether the third number of communications satisfies a third threshold condition based on a third encryption interval corresponding to the third encryption key; and

cause the receiver to receive a fourth number of communications based on a fourth encryption key in response to a determination that the third number of communications satisfies the third threshold condition.

6. The device of claim 5, wherein the first encryption key is the same as the third encryption key, the third threshold condition is equal to the first threshold condition, and the third number of communications is equal to the first number of communications.

7. The device of claim 5, wherein the first encryption key is the same as the third encryption key, the third threshold condition is equal to the first threshold condition, and the third number of communications is not equal to the first number of communications, wherein the control logic to:
indicate an encryption failure of the communication network.

8. The device of claim 5, the control logic further to:

determine the third number of communications does not satisfy the third threshold condition;
fail to decrypt a received communication of the third number of communications using the third encryption key; and
indicate an encryption failure of the communication network.

9. A system comprising:

a first controller coupled to a transmitter via a first control channel;

a second controller coupled to a receiver via a second control channel, wherein the receiver is coupled to the transmitter via a communication network; and
control logic coupled to the first controller and the second controller, the control logic to:

determine whether the first controller is synchronized with a second controller of a second device;
cause the transmitter to transmit a first number of communications based on a first encryption key in response to a determination that the first controller is synchronized with the second controller;
determine whether the first number of communications satisfies a first threshold condition based on a first encryption interval corresponding to the first encryption key; and
cause the transmitter to transmit a second number of communications based on a second encryption key in response to a determination that the first number of communications satisfies the first threshold condition.

10. A method comprising:

determining whether a first controller is synchronized with a second controller;
causing a transmitter coupled to the first controller to transmit a first number of communications based on a first encryption key via a communication network in response to a determination that the first controller is synchronized with the second controller;
determining whether the first number of communications satisfies a first threshold condition based on a first encryption interval corresponding to the first encryption key; and
causing the transmitter to transmit a second number of communications based on a second encryption key in response to a determination that the first number of communications satisfies the first threshold condition.

11. A system for high-speed network communication, the system comprising:

one or more processing units; and
a network interface coupled to the one or more processing units, wherein the network interface comprises a transmitter device and a first controller coupled to the transmitter device by a control channel, wherein the transmitter device to transmit data signal via a communication network, the first controller to:

determine whether the first controller is synchronized with a respective controller of a second device;
cause the transmitter device to transmit a first number of communications based on a first encryption key in response to a determination that the first controller is synchronized with the respective controller;
determine whether the first number of communications satisfies a first threshold condition based on a first encryption interval corresponding to the first encryption key; and
cause the transmitter device to transmit a second number of communications based on a second encryption key in response to a determination that the first number of communications satisfies the first threshold condition.

12. A method comprising:

establishing link-level synchronization between a first device and a second device coupled via a communication network;
encrypting by the first device, a first number of communications during a first interval using a first encryption key of a plurality of encryption keys;
transmitting, by the first device, the first number of communications to the second device;
determining whether the first interval has ended;
responsive to determining, at the first device, that the first interval has ended, rotating to a second encryption key of the plurality of encryption keys at the first device while maintaining the link-level synchronization between the first device and the second device; and
responsive to determining, at the second device, that the first interval has ended, rotating to the second encryption key at the second device while maintaining the link-level synchronization between the first device and the second device.

13. The method of claim 12, further comprising:

encrypting by the first device, a second number of communications during a second interval using the second encryption key;
transmitting by the first device, the second number of communications to the second device;
responsive to determining the second interval has ended, rotating to a third encryption key of the plurality of encryption keys at the first device while maintaining the link-level synchronization between the first device and the second device;
receiving by the second device, the second

**EP 4 765 725 A1**

number of communications from the first device; decrypting by the second device, the second number of communications during the second interval using the second encryption key; and responsive to determining the second interval has ended, rotating to the third encryption key at the second device while maintaining the link-level synchronization between the first device and the second device.

14. The method of claim 12 or 13, wherein establishing the link-level synchronization between the first device and the second devices comprises:

initializing, by a controller coupled to the first device and the second device, a first encryption module of the first device with the first encryption key, wherein the first device refrains from transmitting a first indication of the first encryption key to the second device via the communication network;

initializing, by the controller, a second encryption module of the second device with the first encryption key, wherein the second device refrains from transmitting a second indication of the first encryption key to the first device via the communication network, wherein initializing the first encryption module comprises transmitting by the controller via a control channel, the first encryption key to the first device, and

wherein initializing the second encryption module comprises transmitting by the controller via a control channel, the first encryption key to the second device.

15. The method of claim 14, wherein the first encryption key corresponds to the first interval, wherein a first indication of the first interval is transmitted by the controller to the first device along with the first encryption key, and

wherein a second indication of the first interval is transmitted by the controller to the second device along with the second encryption key.

FIG. 1

**FIG. 2**

**Nth Encryption Key Interval 321N**

| 1st Encryption Key Interval 321A | | | 2nd Encryption Key Interval 321B | | | 3rd Encryption Key Interval 321C | | |
|---|---|---|---|---|---|---|---|---|
| 1st Key Frame 311A | 1st Key Frame 311B | . . . 1st Key Frame 311N | 2nd Key Frame 312A | 2nd Key Frame 312B | 2nd Key Frame 312C | . . . 2nd Key Frame 312N | 3rd Key Frame 313A | 3rd Key Frame 313B |

. . . 3rd Key Frame 313N | Nth Key Frame 314 | . . .

Push Next Encryption Key Interval 322A

Push Next Encryption Key Interval 322B

Push Next Encryption Key Interval 322C

Encryption Key Rotation Event 323A

Encryption Key Rotation Event 323B · · · · · · · · · ·

Encryption Key Rotation Event 323N

# FIG. 3

400

Are the first controller and the second controller synchronized? 401 —— NO

YES

Identify a first encryption key 402

Identify an encryption interval associated with the first encryption key 403

Encrypt a first number of communications using the first encryption key 404

Transmit the first number of communications 405

Increment an encryption interval count for each communication of the first number of communications that is transmitted 406

Does the encryption interval count satisfy the identified encryption interval? 407 —— NO

YES

Reset the encryption interval count to a default value 408

Identify a second encryption key 409

Identify an encryption interval associated with the second encryption key 410

Encrypt a second number of communications using the second encryption key 411

Transmit the second number of communications 412

Increment the encryption interval count for each communication of the second number of communications that is transmitted 413

# FIG. 4

500

Identify a first encryption key 501

Transmit a first number of communications using the first encryption key 502

Increment a first interval count for each communication of the first number of communications that is transmitted 503

Receive a second number of communications 504

Increment a second interval count for each communication of the second number of communications that is received 505

Does the the first interval count match the second interval count? 506

NO

YES

Does the first interval count satisfy an encryption threshold corresponding to the first encryption key? 507

NO

YES

Identify a second encryption key 508

Reset the encryption interval count to a default value 509

Transmit a third number of communications using the second encryption key 510

Increment a third interval count for each communication of the third number of communications that is transmitted 511

Indicate that encryption has failed 520

# FIG. 5

600

Determine whether a first controller is synchronized with a
second controller 601

Cause a transmitter coupled to the first controller to transmit a
first number of communications based on a first encryption key
via a communication link in response to a determination that the
first controller is synchronized with the second controller 602

Determine whether the first number of communications satisfies
a first threshold condition based on a first encryption interval
corresponding to the first encryption key 603

Cause the transmitter to transmit a second number of
communications based on a second encryption key in response
to a determination that the first number of communications
satisfies the first threshold condition 604

# FIG. 6

| PROCESSOR 702 | | EXECUTION UNIT 708 |
|---|---|---|
| CACHE 704 | REGISTER FILE 706 | ENCRYPTION MODULE 709 |

PROCESSOR BUS 710

713

715

| GRAPHICS/VIDEO CARD 712 | MEMORY CONTROLLER HUB (MCH) 714 | MEMORY 716 |
|---|---|---|
| | | INSTRUCTION(S) 718 |
| | | DATA 720 |

711

| DATA STORAGE 722 | | LEGACY I/O CONTROLLER 732 |
|---|---|---|
| TRANSCEIVER 724 | I/O CONTROLLER HUB (ICH) 730 | USER INPUT INTERFACE 734 |
| FIRMWARE HUB 726 | | SERIAL EXPANSION PORT 736 |
| NETWORK CONTROLLER 728 | | AUDIO CONTROLLER 738 |

700

# FIG. 7

FIG. 8

EP 4 765 725 A1

MEMORY DEVICE 930

INSTRUCTIONS 932

DATA 934

DISPLAY DEVICE 936

EXTERNAL PROCESSOR 938

INSTRUCTION SET 922

DATA STORAGE DEVICE 940

TOUCH SENSOR 942

WIRELESS TRANSCIEVER 944

FIRMWARE INTERFACE 946

CACHE MEMORY 902

REGISTER FILE 904

MEMORY CONTROLLER 910

PROCESSOR 906

INSTRUCTION SET 922

GRAPHIC PROCESSOR 908

INSTRUCTION SET 922

ENCRYPTION MODULE 920

INTERFACE BUS 912

PLATFORM CONTROLLER HUB 914

NETWORK CONTROLLER 948

AUDIO CONTROLLER 950

LEGACY I/O CONTROLLER 952

USB CONTROLLER 960

KEYBOARD/MOUSE 962

CAMERA 964

900

# FIG. 9

FIG. 10

**FIG. 11**

**FIG. 12**

Europäisches
Patentamt

European
Patent Office

Office européen
des brevets

# EUROPEAN SEARCH REPORT

**Application Number**

EP 25 22 4813

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Rescorla Eric: "RFC 8446: The Transport Layer Security (TLS) Protocol Version 1.3", , 1 August 2018 (2018-08-01), XP093009668, Retrieved from the Internet: URL:https://www.rfc-editor.org/rfc/rfc844 [retrieved on 2022-12-20] * section 4.6.3, 5.5 * | 1-15 | INV. H04L9/08 H04L9/12 H04L9/40 H10W70/60 |
| X | Donenfeld Jason A: "WireGuard: Next Generation Kernel Network Tunnel", , 1 June 2020 (2020-06-01), XP093394695, Retrieved from the Internet: URL:https://www.wireguard.com/papers/wireg uard.pdf * section 6 * | 1-15 | |
| X | Collective: "Security Protocol and Data Model (SPDM) Specification", , 23 June 2022 (2022-06-23), XP093394937, Retrieved from the Internet: URL:https://www.dmtf.org/sites/default/fil es/standards/documents/DSP0274_1.2.1.pdf * section 10.21 * | 1-15 | TECHNICAL FIELDS SEARCHED (IPC) H04L H10W |
| X | US 2022/360979 A1 (SANTHANA KRISHNAN ARCHANAA [US] ET AL) 10 November 2022 (2022-11-10) * paragraph [0002] * * paragraph [0008] - paragraph [0009] * * paragraph [0023] * * paragraph [0025] - paragraph [0026] * * paragraph [0053] - paragraph [0054] * -/-- | 1-15 | |

The present search report has been drawn up for all claims

| Place of search | Date of completion of the search | Examiner |
|---|---|---|
| Munich | 6 May 2026 | Yamajako-Anzala, A |

page 1 of 2

Europäisches
Patentamt

European
Patent Office

Office européen
des brevets

**EUROPEAN SEARCH REPORT**

**Application Number**

EP 25 22 4813

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/229941 A1 (TANG LAI GUAN [MY] ET AL) 21 July 2022 (2022-07-21) * the whole document * ----- | 1-15 | |
| | | | **TECHNICAL FIELDS SEARCHED (IPC)** |

The present search report has been drawn up for all claims

| Place of search | Date of completion of the search | Examiner |
|---|---|---|
| Munich | 6 May 2026 | Yamajako-Anzala, A |

EPO FORM 1503 03.82 (P04C01)

## ANNEX TO THE EUROPEAN SEARCH REPORT
## ON EUROPEAN PATENT APPLICATION NO.

EP 25 22 4813

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2026

| Patent document cited in search report | | Publication date | Patent family member(s) | | Publication date |
|---|---|---|---|---|---|
| US 2022360979 A1 | | 10-11-2022 | CN | 115314892 A | 08-11-2022 |
| | | | US | 2022360979 A1 | 10-11-2022 |
| | | | US | 2025016557 A1 | 09-01-2025 |
| US 2022229941 A1 | | 21-07-2022 | NONE | | |

EPO FORM P0459

For more details about this annex : see Official Journal of the European Patent Office, No. 12/82